# FASCICULE DE BREVET EUROPEEN

(11) **EP 3 893 638 B1**
(45) Date de publication et mention de la délivrance du brevet: **11.01.2023**
(21) Numéro de dépôt: 20710247.6
(22) Date de dépôt: 18.02.2020
(51) Int. Cl.: A01M 7/00, A01C 23/00, B05B 9/00

(54) **COUVERCLE POUR CUVE COMPRENANT DES ORGANES DE BLOCAGE AXIAL SUR UN REBORD D'OUVERTURE DE LA CUVE**
DECKEL FÜR EINEN BEHÄLTER MIT AXIALEN VERRIEGELUNGSELEMENTEN AN EINEM ÖFFNUNGSRAND DES BEHÄLTERS
COVER FOR A VESSEL COMPRISING AXIAL LOCKING MEMBERS ON AN OPENING RIM OF THE VESSEL

(30) Priorité: 22.02.2019 FR 1901841
(43) Date de publication de la demande: 20.10.2021
(73) Titulaire: Exel Industries, 51200 Epernay (FR)
(72) Inventeur: PITAUD, Sylvain, 75009 PARIS (FR)
(74) Mandataire: Argyma
(86) Numéro de dépôt international: PCT/FR2020/050305
(87) Numéro de publication internationale: WO 2020/169925

(56) Documents cités:
- EP-A1- 2 687 132
- EP-A1- 3 162 253
- EP-A2- 1 342 440
- CN-A- 108 432 725
- GB-A- 744 001

## Description

### DOMAINE TECHNIQUE

L'invention concerne un couvercle pour cuve, notamment destinée à contenir un produit phytosanitaire ou un engrais liquide, un sous-ensemble comprenant une collerette et un tel couvercle, ainsi qu'un ensemble comprenant une cuve et un tel sous-ensemble ou un tel couvercle.

### ÉTAT DE LA TECHNIQUE ANTÉRIEURE

Dans le domaine de la pulvérisation agricole, il est connu d'équiper un engin agricole d'une cuve remplie de produit phytosanitaire ou d'engrais liquide. Ce produit phytosanitaire ou cet engrais liquide est ensuite pulvérisé dans les cultures, lorsque l'engin agricole se déplace dans le champ de cultures.

Cette cuve présente une ouverture qui est définie par un rebord d'ouverture et qui est refermée par un couvercle comprenant, de manière classique, une première et une deuxième partie de couvercle montée pivotante sur la première partie de couvercle autour d'un axe de pivotement de direction axiale, entre une première position angulaire de déblocage et une deuxième position angulaire de blocage dans laquelle le couvercle est bloqué axialement sur le rebord d'ouverture de la cuve.

Afin d'assurer ce blocage axial, le rebord d'ouverture de la cuve est pourvu d'un filet intérieur qui coopère, à l'issue du pivotement de la deuxième partie de couvercle jusqu'à la deuxième position angulaire de blocage, avec un filet extérieur de la deuxième partie de couvercle.

Or, lorsque l'engin agricole se déplace dans le champ de cultures, par exemple sur un terrain accidenté, le produit phytosanitaire ou l'engrais liquide contenu dans la cuve tend à déformer la cuve, notamment au niveau de son ouverture qui s'ovalise. Le rebord d'ouverture de la cuve vient alors presser la deuxième partie de couvercle, globalement vers l'axe de pivotement, souvent jusqu'à l'éjection du couvercle qui libère ainsi l'ouverture de la cuve.

Cette situation n'est toutefois pas acceptable dans la mesure où un déversement accidentel du produit phytosanitaire ou de l'engrais liquide contenu dans la cuve serait néfaste pour l'environnement.

De plus, l'introduction de corps étrangers, tels que du sable ou de la boue, à l'intérieur de la cuve est à éviter. De tels corps étrangers peuvent par exemple endommager le système de pulvérisation par l'intermédiaire duquel le produit phytosanitaire ou l'engrais liquide est aspiré puis pulvérisé dans les cultures, notamment en bouchant des filtres ou encore des buses de ce système de pulvérisation, ou même en rayant des composants des vannes ou de la pompe qui aspire le produit phytosanitaire ou l'engrais liquide contenu dans la cuve pour le pulvériser sur les cultures. GB 744 001 A décrit un couvercle pour cuve selon l'art antérieur.

### EXPOSÉ DE L'INVENTION

Pour pallier ce problème, l'invention propose un couvercle pour cuve comprenant une première partie de couvercle, une deuxième partie de couvercle montée pivotante sur la première partie de couvercle entre une première position angulaire de déblocage et une deuxième position angulaire de blocage, ainsi que des organes de blocage mobiles par rapport à la première et à la deuxième partie de couvercle et destinés à coopérer avec une surface radialement extérieure d'un rebord d'ouverture de la cuve pour bloquer axialement le couvercle par rapport à la cuve, lorsque la deuxième partie de couvercle occupe la deuxième position angulaire de blocage.

Plus précisément, l'invention a pour objet un couvercle pour cuve destinée à contenir un produit phytosanitaire ou un engrais liquide, le couvercle étant destiné à obturer une ouverture de la cuve définie par un rebord d'ouverture, le couvercle comprenant :
- une première partie de couvercle,
- une deuxième partie de couvercle montée pivotante sur la première partie de couvercle autour d'un axe de pivotement de direction axiale, entre une première position angulaire de déblocage du couvercle et une deuxième position angulaire de blocage du couvercle dans laquelle le couvercle est destiné à être bloqué axialement sur le rebord d'ouverture de la cuve s'étendant autour de l'axe de pivotement,
- une pluralité d'organes de blocage répartis autour de l'axe de pivotement, chacun des organes de blocage étant en outre monté mobile par rapport aux première et deuxième parties de couvercle entre une position de déblocage et une position de blocage dans laquelle l'organe de blocage est radialement plus rapproché de l'axe de pivotement qu'en position débloquée et dans laquelle il est destiné à coopérer avec une surface radialement extérieure du rebord d'ouverture de la cuve pour bloquer axialement le couvercle par rapport à la cuve, le couvercle étant conçu de manière à ce que chacun des organes de blocage soit déplacé de sa position de déblocage vers sa position de blocage, lorsque la deuxième partie de couvercle pivote depuis la première position angulaire de déblocage vers la deuxième position angulaire de blocage.

Selon des variantes de réalisation qui peuvent être prises ensemble ou séparément :
- le couvercle comprend un mécanisme de transformation de mouvement conçu pour transformer le pivotement de la deuxième partie de couvercle, par rapport à la première partie de couvercle, depuis la première position angulaire de déblocage vers la deuxième position angulaire de blocage, en déplacement de chacun des organes de blocage, par rapport à la première partie de couvercle, depuis sa position de déblocage vers sa position de blocage ;
- le mécanisme de transformation de mouvement comprend au moins un premier organe d'entraînement porté par la deuxième partie de couvercle et coopérant avec les organes de blocage ou chacun avec l'un ou plusieurs des organes de blocage ;
- le ou chacun des premiers organes d'entraînement est conçu pour entraîner le ou les organes de blocage avec lesquels il coopère, en déplacement par rapport à la première partie de couvercle, depuis leur position de déblocage vers leur position de blocage, lorsque la deuxième partie de couvercle pivote depuis la première position angulaire de déblocage vers la deuxième position angulaire de blocage ;
- le ou chacun des premiers organes d'entraînement forme une came coopérant avec l'un, plusieurs ou les organes de blocage formant ainsi eux-mêmes des suiveurs de came ;
- le ou chacun des premiers organes d'entraînement présente la forme d'une première rainure s'étendant suivant une ligne d'extension, comprise dans un plan orthogonal à l'axe de pivotement, entre une première extrémité et une deuxième extrémité opposée ;
- la ou chacune des premières rainures comprend au moins une première surface d'entraînement par l'intermédiaire de laquelle un, plusieurs ou les organes de blocage sont entraînés en déplacement, par rapport à la première partie de couvercle, entre leur position de déblocage et leur position de blocage, lorsque la deuxième partie de couvercle pivote entre la première position angulaire de déblocage et la deuxième position angulaire de blocage ;
- les organes de blocage sont chacun montés glissant, suivant la ligne d'extension, sur la deuxième partie de couvercle, par l'intermédiaire de la ou des premières surfaces d'entraînement des premières rainures ;
- la ligne d'extension de la ou de chacune des premières rainures présente la forme d'une spirale ;
- les premières rainures sont plus resserrées au niveau de leur deuxième extrémité vers laquelle les organes de blocage se déplacent, lorsque la deuxième partie de couvercle pivote vers la première position angulaire de déblocage, qu'au niveau de leur première extrémité et qu'entre leurs première et deuxième extrémités ;
- les deux premières rainures avec lesquelles coopèrent chaque paire d'organes de blocage circonférentiellement adjacents autour de l'axe de pivotement sont décalées radialement l'une de l'autre par rapport à l'axe de pivotement ;
- les premières rainures coopèrent chacune avec l'un, plusieurs ou les organes de blocage par l'intermédiaire d'un pion orienté axialement et faisant saillie depuis l'organe de blocage ;
- chacun des organes de blocage est monté coulissant, par rapport à la première partie de couvercle, entre sa position de déblocage et sa position de blocage, suivant une ligne de coulissement ;
- chacune des lignes de coulissement est rectiligne et comprise dans un plan orthogonal à l'axe de pivotement, de sorte à former un axe de coulissement radial par rapport à l'axe de pivotement ;
- la première partie de couvercle porte des organes de guidage chacun conçus pour guider l'un des organes de blocage en coulissement suivant sa ligne de coulissement, par rapport à la première partie de couvercle, entre sa position de déblocage et sa position de blocage ;
- les organes de blocage comprennent chacun un corps muni d'une griffe destinée à coopérer avec la surface radialement extérieure du rebord d'ouverture de la cuve pour bloquer axialement le couvercle par rapport à la cuve, lorsque l'organe de blocage occupe sa position de blocage ;
- le couvercle comprend un mécanisme de verrouillage conçu pour verrouiller automatiquement le pivotement de la deuxième partie de couvercle, par rapport à la première partie de couvercle, dans un sens de pivotement allant de la deuxième position angulaire de blocage vers la première position angulaire de déblocage, lorsque la deuxième partie de couvercle atteint la deuxième position angulaire de blocage ;
- le mécanisme de verrouillage comprend :
   ∘ un organe de verrouillage monté mobile sur l'une des première et deuxième parties de couvercle entre une position de repos et une position contrainte dans laquelle un organe de rappel élastique rappelle l'organe de verrouillage en déplacement vers la position de repos,
   ∘ un deuxième organe d'entraînement solidaire de l'autre des première et deuxième parties de couvercle, et conçu d'une part pour entraîner l'organe de verrouillage en déplacement depuis la position de repos vers la position contrainte ou pour maintenir l'organe de verrouillage en position contrainte, lorsque la deuxième partie de couvercle pivote depuis la première position angulaire de déblocage vers la deuxième position angulaire de blocage, et d'autre part pour relâcher l'organe de verrouillage, lorsque la deuxième partie de couvercle atteint la deuxième position angulaire de blocage ;
- l'organe de verrouillage est conçu pour venir en butée contre l'autre des première et deuxième parties de couvercle, lorsque la deuxième partie de couvercle atteint la deuxième position angulaire de blocage et que l'organe de verrouillage se déplace depuis la position contrainte vers la position de repos sous l'effet de l'organe de rappel élastique, de sorte à verrouiller automatiquement le pivotement de la deuxième partie de couvercle dans le sens de pivotement allant de la deuxième position angulaire de blocage vers la première position angulaire de déblocage ;
- l'organe de verrouillage est monté basculant sur l'une des première et deuxième parties de couvercle, entre la position de repos et la position contrainte, autour d'un axe de basculement orienté circonférentiellement autour de l'axe de pivotement ;
- le deuxième organe d'entraînement forme une came coopérant avec l'organe de verrouillage formant ainsi lui-même un suiveur de came ;
- le deuxième organe d'entraînement présente la forme d'une rampe portée par l'autre des première et deuxième parties de couvercle et comprenant une deuxième surface d'entraînement par l'intermédiaire de laquelle l'organe de verrouillage est entraîné en déplacement depuis la position de repos vers la position contrainte, ou est maintenu en position contrainte, lorsque la deuxième partie de couvercle pivote depuis la première position angulaire de déblocage vers la deuxième position angulaire de blocage ;
- l'organe de verrouillage est conçu pour glisser sur la deuxième surface d'entraînement de la rampe, suivant une ligne de glissement, lorsque la deuxième partie de couvercle pivote depuis la première position angulaire de déblocage vers la deuxième position angulaire de blocage ;
- la ligne de glissement est rectiligne, formant ainsi un axe de glissement ;
- l'organe de verrouillage comprend une surface biseautée par l'intermédiaire de laquelle l'organe de verrouillage glisse sur la deuxième surface d'entraînement de la rampe ;
- l'autre des première et deuxième parties de couvercle comprend une surface de butée orientée circonférentiellement dans un premier sens de pivotement vers la deuxième position angulaire de blocage, et contre laquelle l'organe de verrouillage vient en butée, lorsque la deuxième partie de couvercle atteint la deuxième position angulaire de blocage et que l'organe de verrouillage se déplace depuis la position contrainte vers la position de repos sous l'effet de l'organe de rappel élastique ;
- la surface de butée est formée sur la rampe ;
- le mécanisme de verrouillage comprend un organe de déverrouillage conçu pour déverrouiller manuellement le pivotement de la deuxième partie de couvercle, par rapport à la première partie de couvercle, dans le sens de pivotement allant de la deuxième position angulaire de blocage vers la première position angulaire de déblocage, lorsque la deuxième partie de couvercle occupe dans la deuxième position angulaire de blocage ;
- l'organe de déverrouillage est conçu pour entraîner l'organe de verrouillage en déplacement depuis la position de repos vers la position contrainte ;
- l'organe de déverrouillage présente la forme d'un bouton poussoir, monté coulissant sur l'une des première et deuxième parties de couvercle suivant un axe de coulissement, entre une position relâchée dans laquelle l'organe de verrouillage est en position de repos et une position activée dans laquelle l'organe de verrouillage est en position contrainte ;
- le bouton poussoir forme une tige s'étendant suivant l'axe de coulissement entre une première extrémité et une deuxième extrémité opposée, par l'intermédiaire de laquelle le bouton poussoir entraîne en déplacement l'organe de verrouillage depuis la position de repos vers la position contrainte ;
- le mécanisme de verrouillage est axialement interposé entre les première et deuxième parties de couvercle, de sorte à être logé à l'intérieur du couvercle ;
- la première extrémité du bouton poussoir fait saillie depuis l'une des première et deuxième parties de couvercle, à l'extérieur du couvercle ;
- la deuxième extrémité du bouton poussoir porte une première face, perpendiculaire à l'axe de coulissement et orientée vers l'organe de verrouillage d'un côté opposé à la première extrémité du bouton poussoir;
- la première face du bouton poussoir est conçue pour pousser l'organe de verrouillage suivant l'axe de coulissement, lorsque le bouton poussoir coulisse vers la position activée, de sorte à entraîner l'organe de verrouillage en déplacement depuis la position de repos vers la position contrainte ;
- l'organe de rappel élastique est aussi conçu pour rappeler le bouton poussoir vers la position relâchée ;
- le bouton poussoir porte une saillie s'étendant radialement par rapport à l'axe de coulissement et conçue pour venir en butée contre l'une des première et deuxième parties de couvercle, lorsque le bouton poussoir coulisse vers la position relâchée.

L'invention concerne aussi un sous ensemble pour cuve, destinée à contenir un produit phytosanitaire ou un engrais liquide, comprenant un couvercle tel que précédemment décrit, et une collerette annulaire, s'étendant autour de l'axe de pivotement et destinée à être fixée au rebord d'ouverture de la cuve, les organes de blocage coopérant avec la surface radialement extérieure du rebord d'ouverture de la cuve par l'intermédiaire de la collerette, lorsque les organes de blocage occupent leur position de blocage.

Selon des variantes de réalisation qui peuvent être prises ensemble ou séparément :
- le sous-ensemble comprend en outre des écrous à sertir destinés à fixer la collerette au rebord d'ouverture de la cuve ;
- chacun des organes de blocage comprend un corps muni d'une griffe conçue pour se loger dans une encoche creusée, globalement radialement par rapport à l'axe de pivotement, dans une surface radialement extérieure de la collerette, lorsque l'organe de blocage occupe sa position de blocage, et pour libérer l'encoche, lorsque l'organe de blocage occupe sa position de déblocage.

L'invention concerne encore un ensemble comprenant une cuve destinée à contenir un produit phytosanitaire ou un engrais liquide ainsi qu'un couvercle tel que précédemment décrit ou un sous-ensemble tel que précédemment décrit.

### BRÈVE DESCRIPTION DES DESSINS

D'autres aspects, buts, avantages et caractéristiques de l'invention apparaîtront mieux à la lecture de la description détaillée suivante de formes de réalisation préférés de celle-ci, donnée à titre d'exemple non limitatif, et faite en référence aux dessins annexés sur lesquels :
- la figure 1 est une vue éclatée d'un sous-ensemble pour cuve comprenant une collerette et un couvercle selon un mode de réalisation de l'invention ;
- la figure 2 est une vue de dessus d'un ensemble comprenant la cuve et le sous-ensemble illustré à la figure 1, le couvercle occupant une première position angulaire de déblocage ;
- la figure 3 est une vue de dessus de l'ensemble illustré à la figure 2, le couvercle occupant une deuxième position angulaire de déblocage ;
- la figure 4 est une vue partielle, en coupe axiale, de l'ensemble illustré aux figures 2 et 3, le couvercle occupant la première position angulaire de déblocage et des organes de blocage dudit couvercle occupant une position de déblocage ;
- la figure 5 est une vue partielle, en coupe axiale, de l'ensemble illustré aux figures 2 à 4, le couvercle occupant la deuxième position angulaire de blocage et les organes de blocage occupant une position de blocage ;
- la figure 6 est une vue partielle, en coupe axiale, de l'ensemble illustré aux figures 2 à 5 ;
- la figure 7 est une vue de dessus, partielle, du sous-ensemble illustré aux figures 1 et 4 à 6, le couvercle occupant la première position angulaire de déblocage et des organes de blocage dudit couvercle occupant une position de déblocage ;
- la figure 8 est une vue de dessus, partielle, du sous-ensemble illustré aux figures 1 et 4 à 7, le couvercle occupant la deuxième position angulaire de blocage et les organes de blocage occupant une position de blocage ;
- la figure 9 est un schéma cinématique d'un mécanisme de transformation de mouvement du couvercle illustré aux figures 1 et 4 à 8 ;
- la figure 10 est une vue de détail d'un mécanisme de verrouillage du couvercle illustré aux figures 1 et 4 à 9, le couvercle occupant la deuxième position angulaire de blocage et un organe de verrouillage du mécanisme de verrouillage occupant une position de repos ;
- la figure 11 est une vue de détail du mécanisme de verrouillage illustré à la figure 10, le couvercle occupant une première position intermédiaire entre la première position angulaire de déblocage et la deuxième position angulaire de blocage et l'organe de verrouillage occupant une position contrainte ;
- la figure 12 est une vue de détail du mécanisme de verrouillage illustré aux figures 10 et 11, le couvercle occupant une deuxième position intermédiaire entre la première position angulaire de déblocage et la deuxième position angulaire de blocage et l'organe de verrouillage occupant la position de repos ;
- la figure 13 est une vue de détail, en coupe axiale, du mécanisme de verrouillage illustré aux figures 10 à 12, le couvercle occupant la deuxième position angulaire de blocage, l'organe de verrouillage occupant la position de repos et un organe de déverrouillage du mécanisme de verrouillage occupant une position relâchée ;
- la figure 14 est une vue de détail, en coupe axiale, du mécanisme de verrouillage illustré aux figures 10 à 13, le couvercle occupant la deuxième position angulaire de blocage, l'organe de verrouillage occupant la position contrainte et l'organe de déverrouillage occupant une position activée ;
- la figure 15 est une vue du couvercle suivant la coupe A-A de la figure 13, le couvercle occupant la deuxième position angulaire de blocage et l'organe de verrouillage occupant la position de repos ;
- la figure 16 est une vue du couvercle suivant la coupe B-B de la figure 14, le couvercle occupant la deuxième position angulaire de blocage et l'organe de verrouillage occupant la position contrainte.

### DESCRIPTION DETAILLEE

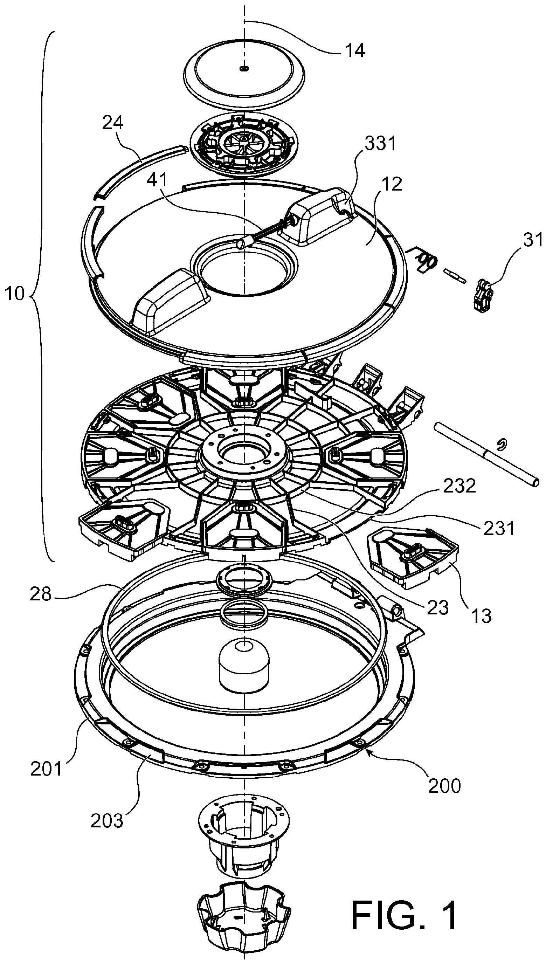

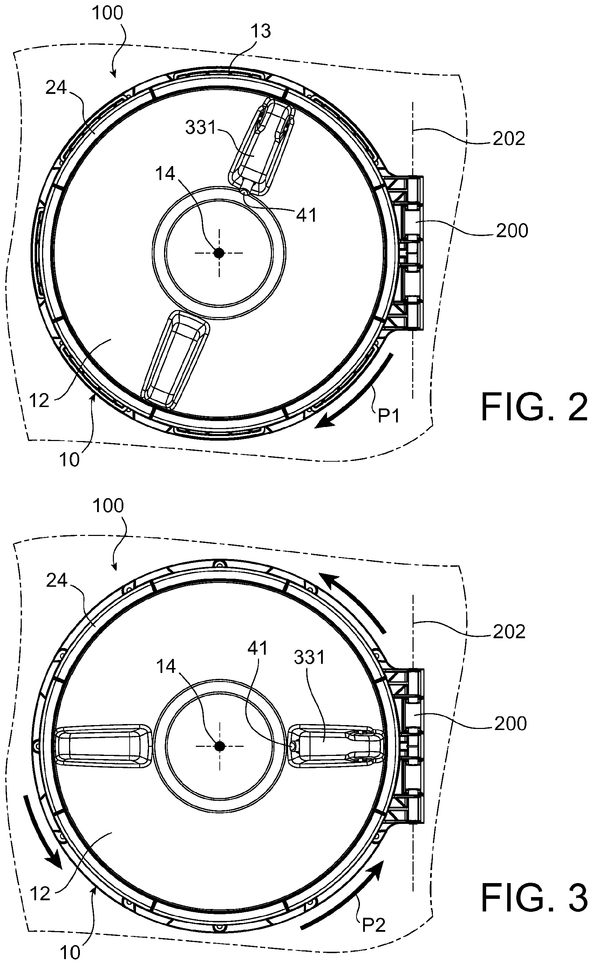

La figure 1 montre un sous-ensemble pour cuve 100, par exemple destinée à contenir un produit phytosanitaire ou un engrais liquide, comprenant un couvercle 10 et une collerette 200 qui sera décrite plus en détail plus loin dans la description. Les figures 2 à 6 montrent encore un ensemble comprenant la cuve 100, la collerette 200 et le couvercle 10 obturant une ouverture 101 de la cuve 100 définie par un rebord d'ouverture 102. La cuve 100 est par exemple destinée à équiper un engin agricole (non représenté).

Le couvercle 10 comprend une première partie de couvercle 11, une deuxième partie de couvercle 12 et une pluralité d'organes de blocage 13.

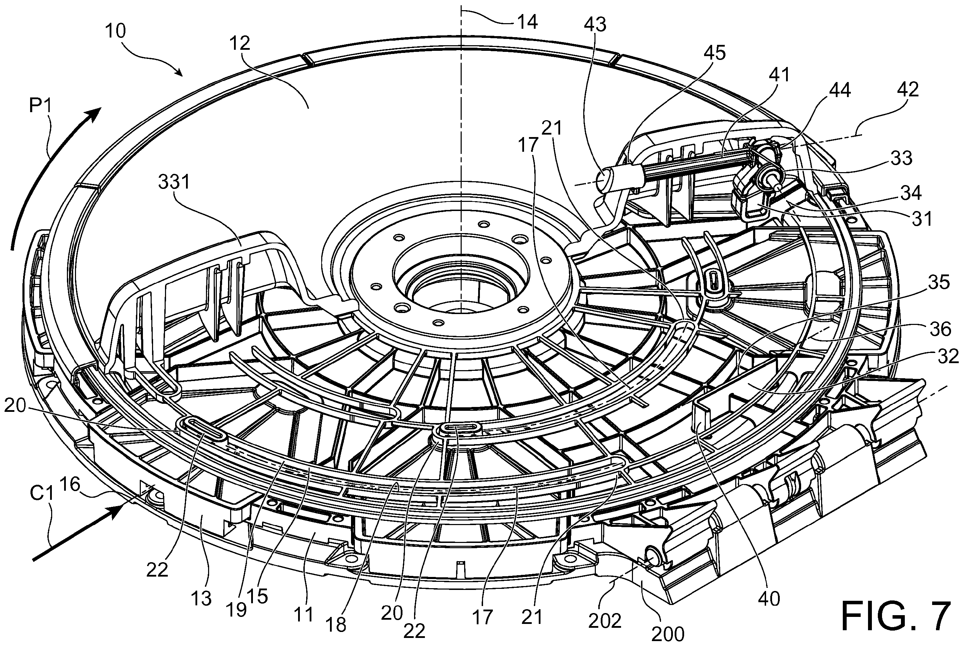

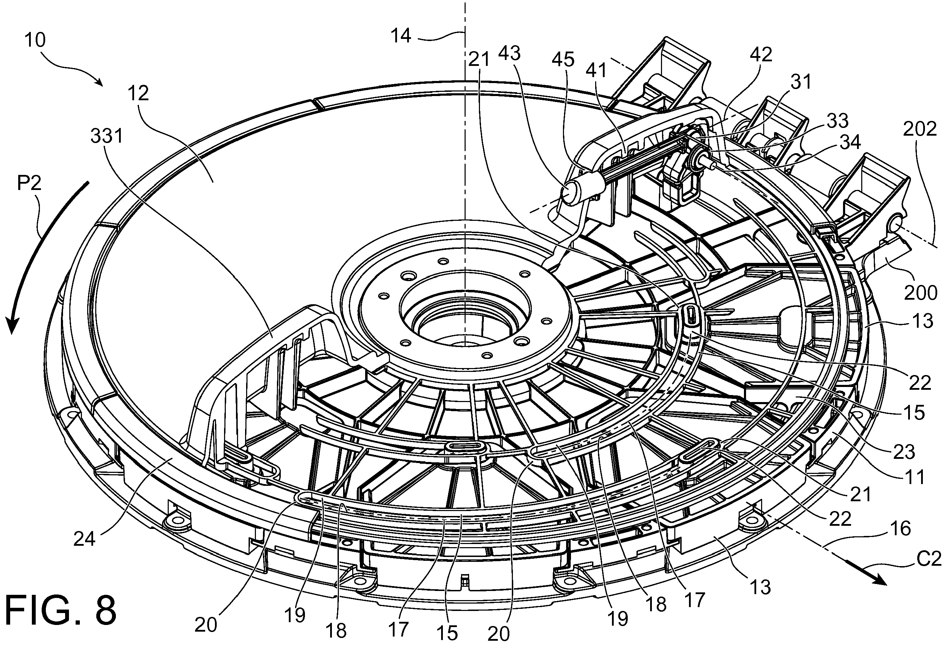

La deuxième partie de couvercle 12 est montée pivotante sur la première partie de couvercle 11, autour d'un axe de pivotement 14, entre une première position angulaire de déblocage et une deuxième position angulaire de blocage dans laquelle le couvercle 10 est bloqué axialement sur le rebord d'ouverture 102 de la cuve 100 qui s'étend autour de l'axe de pivotement 14. La deuxième partie de couvercle 12 pivote ainsi depuis la première position angulaire de déblocage vers la deuxième position angulaire de blocage dans un premier sens de pivotement P1 (figures 2 et 7), et depuis la deuxième position angulaire de blocage vers la première position angulaire de déblocage dans un deuxième sens de pivotement P2 (figures 3 et 8) opposé au premier sens de pivotement P1.

De cette manière, dans la deuxième position angulaire de blocage, le blocage axial du couvercle 10 sur le rebord d'ouverture 102 de la cuve 100 retient le couvercle 10 sur la cuve 100 et maintient ainsi la cuve 100 fermée. Au contraire, dans la première position angulaire de blocage, à défaut de blocage axial du couvercle 10 sur le rebord d'ouverture 102 de la cuve 100, le couvercle 10 peut libérer l'ouverture 101 de la cuve 100, la cuve 100 pouvant ainsi être ouverte.

Dans la suite de la description, la direction axiale est la direction de l'axe de pivotement 14. La direction radiale R est en tout point une direction orthogonale à l'axe de pivotement 14 et passant par ce dernier, et la direction circonférentielle est en tout point une direction orthogonale à la direction radiale et à l'axe de pivotement 14. La direction axiale est par exemple verticale, les directions radiale et circonférentielle étant ainsi horizontales.

La première partie de couvercle 11 forme par exemple une partie inférieure du couvercle 10, tandis que la deuxième partie de couvercle 12 forme une partie supérieure du couvercle 10.

Les organes de blocage 13 sont répartis autour de l'axe de pivotement 14.

Chacun des organes de blocage 13 est encore monté mobile par rapport aux première et deuxième parties de couvercle 11, 12 entre une position de déblocage (figures 2, 4 et 7) et une position de blocage (figures 3, 5 et 8) dans laquelle l'organe de blocage 13 est radialement plus rapproché de l'axe de pivotement 14 qu'en position débloquée et dans laquelle il coopère avec une surface radialement extérieure 103 du rebord d'ouverture 102 de la cuve 100 pour bloquer axialement le couvercle 10 par rapport à la cuve 100.

Le couvercle 10 est en outre conçu de manière à ce que chacun des organes de blocage 13 soit déplacé, par rapport aux première et deuxième parties de couvercle 11, 12 de sa position de déblocage vers sa position de blocage, lorsque la deuxième partie de couvercle 12 pivote depuis la première position angulaire de déblocage vers la deuxième position angulaire de blocage. De la même manière, lorsque la deuxième partie de couvercle 12 pivote depuis la deuxième position angulaire de blocage vers la première position angulaire de déblocage, chacun des organes de blocage 13 est déplacé de sa position blocage vers sa position de déblocage.

De cette manière, lorsque la deuxième partie de couvercle 12 occupe la deuxième position angulaire de blocage et que les organes de blocage 13 occupent leur position de blocage, ces derniers coopèrent avec la surface radialement extérieure 103 de la cuve 100 (figures 3, 5 et 8). Ainsi, lorsque l'engin agricole se déplace dans le champ de cultures, par exemple sur terrain accidenté, et que le produit phytosanitaire ou l'engrais liquide contenu dans la cuve 100 tend à déformer la cuve 100, notamment au niveau de son ouverture 101 qui s'ovalise, le rebord d'ouverture 102 de la cuve 100 vient presser la deuxième partie de couvercle 12, dans un sens opposé à l'axe de pivotement 14, de sorte qu'il retient le couvercle 10 plutôt qu'il ne l'éjecte. Les risques d'ouverture intempestive de la cuve 100 sont ainsi réduits.

Les organes de blocage 13 sont par exemple axialement interposés entre les première et deuxième parties de couvercle 11, 12, de sorte à être logés dans un espace intérieur du couvercle 10.

Le couvercle 10 comprend par exemple un mécanisme de transformation de mouvement 15, 23 conçu pour transformer le pivotement de la deuxième partie de couvercle 12, par rapport à la première partie de couvercle 11, depuis la première position angulaire de déblocage vers la deuxième position angulaire de blocage, en déplacement de chacun des organes de blocage 13, par rapport à la première partie de couvercle 11, depuis sa position de déblocage vers sa position de blocage.

Il en est de même du pivotement de la deuxième partie de couvercle 12, depuis la deuxième position angulaire de blocage vers la première position angulaire de déblocage, qui est transformé en déplacement de chacun des organes de blocage 13 depuis sa position de blocage vers sa position de déblocage.

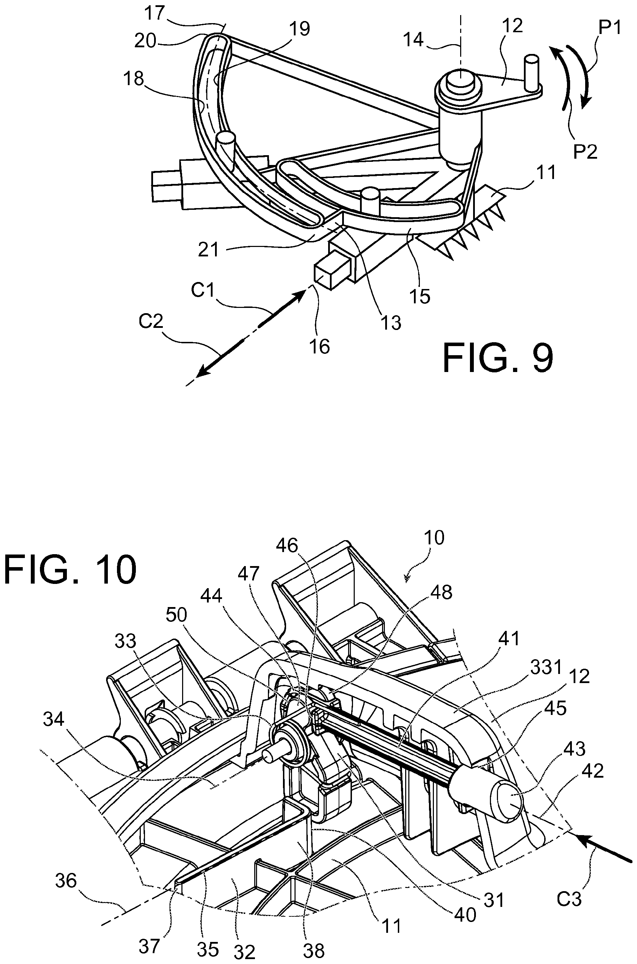

Les figures 7 et 8 montrent plus en détail le mécanisme de transformation de mouvement 15, 23. La figure 9 montre la cinématique du mécanisme de transformation de mouvement 15, 23.

Pour cela, le mécanisme de transformation de mouvement 15, 23 comprend au moins un premier organe d'entraînement 15 porté par la deuxième partie de couvercle 12 et coopérant avec les organes de blocage 13 ou chacun avec l'un ou plusieurs des organes de blocage 13.

Le ou les premiers organes d'entraînement 15 sont en outre conçus pour entraîner le ou les organes de blocage 13 avec lesquels il coopère, en déplacement par rapport à la première partie de couvercle 11, depuis leur position de déblocage vers leur position de blocage, lorsque la deuxième partie de couvercle 12 pivote depuis la première position angulaire de déblocage vers la deuxième position angulaire de blocage.

Il en est de même depuis la position de blocage vers la position de déblocage de chacun des organes de blocage 13, lorsque la deuxième partie de couvercle 12 pivote depuis la deuxième position angulaire de blocage vers la première position angulaire de déblocage. Le ou les premiers organes d'entraînement 15 portées par la deuxième partie de couvercle 12 assurent ainsi aux organes de blocage 13 un mouvement alternatif ou encore de va-et-vient, par rapport à la première partie de couvercle 11, entre leur position de déblocage et leur de position de blocage.

Dans la suite de la description, le mécanisme de transformation de mouvement 15, 23 sera décrit comme comprenant plusieurs premiers organes d'entraînement 15 coopérant chacun avec l'un des organes de blocage 13, sans que cela ne soit limitatif. Ainsi, il est entendu que l'homme du métier saura adapter la description qui suit au cas où le mécanisme de transformation de mouvement 15, 23 ne comprend qu'un unique premier organe d'entraînement 15 coopérant avec l'ensemble des organes de blocage 13 et au cas où le mécanisme de transformation de mouvement 15, 23 comprend plusieurs premiers organes d'entraînement 15 coopérant chacun avec plusieurs organes de blocage 13.

Les premiers organes d'entraînement 15 forment par exemple chacun une came coopérant, notamment par glissement, avec l'un des organes de blocage 13 formant ainsi lui-même un suiveur de came.

Pour cela, chacun des premiers organes d'entraînement 15 peut présenter la forme d'une première rainure s'étendant suivant une ligne d'extension 17, comprise dans un plan (non représenté) orthogonal à l'axe de pivotement 14. La ligne d'extension 17 peut être courbe ou encore rectiligne, comme cela sera décrit plus en détail dans la suite de la description.

Chaque première rainure 15 comprend au moins une première surface d'entraînement ou encore de came 18, 19, notamment deux, par l'intermédiaire de laquelle les organes de blocage 13 sont entraînés en déplacement, par rapport à la première partie de couvercle 11, entre leur position de déblocage et leur position de blocage, lorsque la deuxième partie de couvercle 12 pivote entre la première position angulaire de déblocage et la deuxième position angulaire de blocage.

Les premières surfaces d'entraînement 18, 19 sont globalement parallèles entre elles et avec la ligne d'extension 17 et sont orientées l'une en regard de l'autre. Les premières surfaces d'entraînement 18, 19 sont par exemple aussi orientées parallèlement à l'axe de pivotement 14.

Les organes de blocage 13 sont en outre chacun montés glissant, suivant la ligne d'extension 17, sur la deuxième partie de couvercle 12, par l'intermédiaire des premières surfaces d'entraînement 18, 19.

En variante (non représentée), les organes de blocage 13 sont chacun montés roulant sur les premières surfaces d'entraînement 18, 19, autour d'un axe de roulement parallèle à l'axe de pivotement 14.

De cette manière, lorsque la deuxième partie de couvercle 12 pivote vers la deuxième position angulaire de déblocage, les organes de blocage 13 se déplacent, par rapport à la deuxième partie de couvercle 12, le long de la première rainure 15 avec laquelle ils coopèrent, notamment en glissant contre les premières surfaces d'entraînement 18, 19, et sont ainsi entraînés en déplacement, par rapport à la première partie de couvercle 11, vers leur position de blocage. Il en est de même, lorsque la deuxième partie de couvercle 12 pivote vers la première position angulaire de blocage et que les organes de blocage 13 se déplacent vers leur position de déblocage.

Chacune des premières rainures 15 s'étend encore suivant la ligne d'extension 17 entre une première extrémité 20 vers laquelle les organes de blocage 13 se déplacent, lorsque la deuxième partie de couvercle 12 pivote vers la première position angulaire de déblocage, et une deuxième extrémité 21 opposée, vers laquelle les organes de blocage 13 se déplacent, lorsque la deuxième partie de couvercle 12 pivote vers la deuxième position angulaire de blocage.

D'une part, la deuxième extrémité 21 des premières rainures 15 est radialement plus rapprochée de l'axe de pivotement 14 que la première extrémité 20, de sorte à assurer le décalage radial des organes de blocage 13 entre leur position de déblocage et leur position de blocage.

D'autre part, la deuxième extrémité 21 des premières rainures 15 est circonférentiellement écartée de la première extrémité 20 dans le premier sens de pivotement P1, de sorte à autoriser le pivotement de la deuxième partie de couvercle 12, par rapport aux organes de blocage 13, entre la première position angulaire de déblocage et la deuxième position angulaire de blocage.

Chacune des premières rainures 15 se décale en outre radialement et circonférentiellement, depuis sa première extrémité 20 vers sa deuxième extrémité 21, de manière progressive, de sorte à déplacer les organes de blocage 13 entre leur position de déblocage et leur position de blocage, sans blocage.

Pour cela, la ligne d'extension 17 de chacune des premières rainures 15 présente par exemple la forme d'une spirale. De cette manière, pour une distance radiale à parcourir par les organes de blocage 13 entre leur position de déblocage et leur position de blocage, les premières rainures 15 autorisent un pivotement de la deuxième partie de couvercle 12 sur un secteur angulaire plus important, notamment comparativement à une variante (non représentée) avec des premières rainures 15 rectilignes. Les premières rainures 15 autorisent ainsi une plus grande amplitude de pivotement pour la deuxième partie de couvercle 12.

Chaque première rainure 15 s'étend par exemple suivant sa ligne d'extension 17, entre ses première et deuxième extrémités 20, 21, sur un secteur angulaire compris entre 65° et 75°, notamment égal à 69°.

Les organes de blocage 13 peuvent aussi être conçus pour venir en butée contre la deuxième extrémité 21 des premières rainures 15, lorsque la deuxième partie de couvercle 12 pivote vers la deuxième position angulaire de blocage (figure 8), et pour venir en butée contre la première extrémité 20 des premières rainures 15, lorsque la première partie de couvercle 12 pivote vers la première position angulaire de blocage (figure 7).

De cette manière, lorsque les organes de blocage 13 sont en butée contre la deuxième extrémité 21 des premières rainures 15, ils occupent leur position de blocage et la deuxième partie de couvercle 12 occupe la deuxième position angulaire de blocage (figure 8). Lorsque les organes de blocage 13 sont en butée contre la première extrémité 20 des premières rainures 15, ils occupent leur position de déblocage et la deuxième partie de couvercle 12 occupe la première position angulaire de déblocage (figure 7).

Un décalage radial entre les première et deuxième extrémités 20, 21 des premières rainures 15 est par exemple compris entre 7 et 10mm, notamment égal à 8.5mm. Ainsi, les organes de blocage 13 se déplacent eux-mêmes radialement de 7 à 10mm, notamment de 8.5mm.

Les premières surfaces d'entraînement 18, 19 de chacune des premières rainures 15 sont par exemple plus rapprochées l'une de l'autre au niveau de leur deuxième extrémité 21, qu'au niveau de leur première extrémité 20 et qu'entre leur première et deuxième extrémités 20, 21. Les premières rainures 15 sont ainsi plus resserrées au niveau de leur deuxième extrémité 21, qu'au niveau de leur première extrémité 20 et qu'entre leur première et deuxième extrémités 20, 21.

De cette manière, les premières rainures 15 prévoient un montage avec jeu des organes de blocage 13 au niveau de leur première extrémité 20 et entre leurs première et deuxième extrémités 20, 21, et un montage ajusté ou encore serré des organes de blocage 13 au niveau de leur deuxième extrémité 21.

Ainsi, les frottements entre les organes de blocage 13 et les premières surfaces d'entraînement 18, 19 sont augmentés au niveau de la deuxième extrémité 21 des premières rainures 15, de sorte à éviter que les organes de blocage 13 bougent en position de blocage. Les frottements sont en revanche diminués au niveau de la première extrémité 21 et entre les première et deuxième extrémités 20, 21 afin de réduire le couple nécessaire au pivotement de la deuxième partie de couvercle 12.

Les organes de blocage 13 glissent par exemple le long des premières rainures 15 par l'intermédiaire de bossages (non représentés) portés par les organes de blocage 13, notamment usinés sur les organes de blocage 13. Les bossages coopèrent par exemple avec les premières surfaces d'entraînement 18, 19. Les bossages s'étendent par exemple radialement.

Les deux premières rainures 15 avec lesquelles coopèrent chaque paire d'organes de blocage 13 circonférentiellement adjacents sont par exemple décalées radialement l'une de l'autre.

De cette manière, il est possible d'augmenter le nombre d'organes de blocage 13 répartis autour de l'axe de pivotement 14, sans diminuer le secteur angulaire sur lequel la deuxième partie de couvercle 12 pivote.

Les premières rainures 15 coopèrent par exemple chacune avec l'un des organes de blocage 13 par l'intermédiaire d'un pion 22 orienté axialement et faisant saillie depuis l'organe de blocage 13. Chaque organe de blocage 13 porte ainsi un pion 22 coopérant, notamment par glissement, avec les premières surfaces d'entraînement 18, 19 d'une des premières rainures 15. Les pions 22 portent par exemple les bossages.

En variante (non représentée), les pions 22 sont portés par la deuxième partie de couvercle 12, tandis que les premières rainures 15 sont portées par les organes de blocage 13.

Encore en variante (non représentée), le mécanisme de transformation de mouvement 15, 23 comprend un unique premier organe d'entraînement 15 présentant la forme d'une pièce solidaire en pivotement avec la deuxième partie de couvercle 12 autour de l'axe de pivotement 14. Cette pièce comprend plusieurs surfaces de came, parallèles à l'axe de pivotement 14 et réparties autour de l'axe de pivotement 14. Les surfaces de came sont orientées dans un sens opposé à l'axe de pivotement 14. Chacune de ces surfaces de came coopèrent en outre, notamment par glissement, avec l'un des organes de blocage 13 formant ainsi un suiveur de came. Le couvercle 10 comprend en outre un ou plusieurs organes de rappel élastique montés entre les organes de blocage 13 et la première partie de couvercle 11 et conçus pour rappeler les organes de blocage 13 vers leur position de blocage.

Chacun des organes de blocage 13 est par exemple monté coulissant, par rapport à la première partie de couvercle 11, entre sa position de déblocage et sa position de blocage, suivant une ligne de coulissement 16, les organes de blocage 13 étant ainsi entraînés en coulissement par les premiers organes d'entrainement 15. Chacun des organes de blocage 13 coulisse ainsi par rapport à la première partie de couvercle 11, depuis sa position de déblocage vers sa position de blocage, dans un premier sens de coulissement C1, et depuis sa position de blocage vers sa position de déblocage dans un deuxième sens de coulissement C2 opposé au premier sens de coulissement C1.

Chacune des lignes de coulissement 16 est par exemple comprise dans un plan (non représenté) orthogonal à l'axe de pivotement 14.

Chacune des lignes de coulissement 16 est par exemple rectiligne.

Chacune des lignes de coulissement 16 forme ainsi un axe de coulissement radial, lorsqu'elle est rectiligne et comprise dans un plan orthogonal à l'axe de pivotement 14.

De cette manière, les organes de blocage 13 coulissent chacun radialement, par rapport à la première partie de couvercle 11, entre leur position débloquée et leur position bloquée.

En variante (non représentée), chacune des lignes de coulissement 16 est courbe.

La première partie de couvercle 11 porte par exemple des organes de guidage 23 chacun conçus pour guider l'un des organes de blocage 13 en déplacement, notamment en coulissement suivant la ligne de coulissement 16, par rapport à la première partie de couvercle 11, entre sa position de déblocage et sa position de blocage.

Pour cela, chacun des organes de guidage 23 présente par exemple la forme d'une deuxième rainure s'étendant suivant la ligne de coulissement 16 et logeant l'un des organes de blocage 13, de sorte à le guider en coulissement entre sa position de déblocage et sa position de blocage.

Les deuxièmes rainures 23 s'étendent par exemple chacune suivant la ligne de coulissement 16 entre une première extrémité 231 et une deuxième extrémité 232 opposée, qui est radialement plus rapprochée de l'axe de pivotement 14 que la première extrémité 231 (figure 1).

Les organes de blocage 13 font par exemple chacun radialement saillie, dans un sens opposé à l'axe de pivotement 14, depuis la première extrémité 231 de la deuxième rainure 23 dans laquelle il est logé (figures 2 et 7). Cela permet aux organes de blocage 13 de coopérer avec la surface radialement extérieure 103 du rebord d'ouverture 102 de la cuve 100 pour bloquer axialement le couvercle 10 par rapport à la cuve 100, lorsqu'ils occupent leur position de blocage.

La collerette 200 est par exemple annulaire et s'étend autour de l'axe de pivotement 14. La collerette 200 est en outre fixée au rebord d'ouverture 102 de la cuve 100, les organes de blocage 13 coopérant en outre avec la surface radialement extérieure 103 du rebord d'ouverture 102 de la cuve 100 par l'intermédiaire de la collerette 200, lorsqu'ils occupent leur position de blocage.

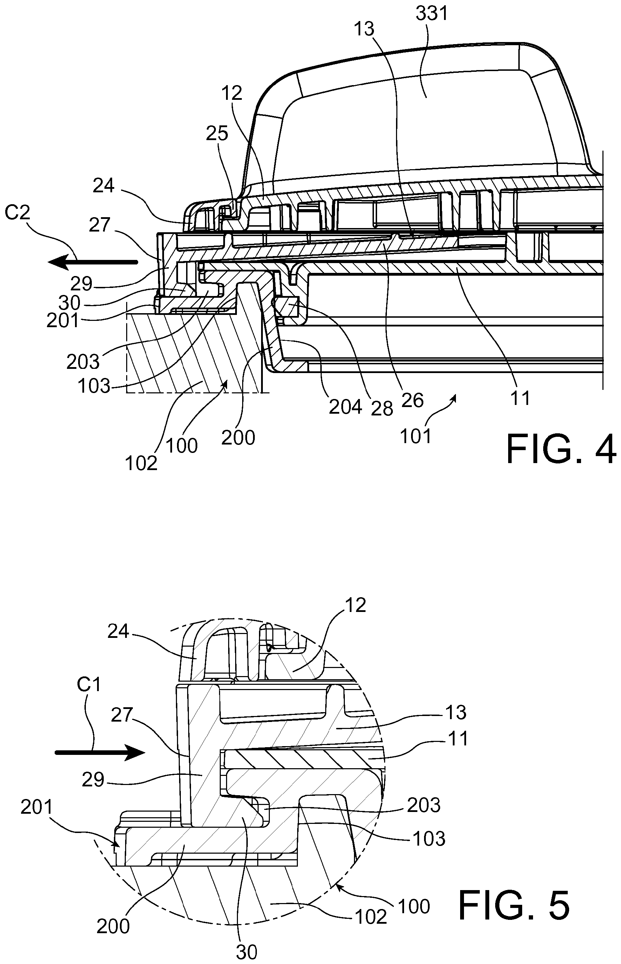

Pour cela, la collerette 200 présente elle-même une surface radialement extérieure 201 avec laquelle les organes de blocage 13 coopèrent en position de blocage (figure 5).

Le couvercle 10 est par exemple articulé sur la collerette 200 autour d'un axe d'articulation 202, sensiblement perpendiculaire à l'axe de pivotement 14, entre une position d'ouverture du couvercle 10 et une position de fermeture du couvercle 10 dans laquelle le couvercle 10 obture l'ouverture 101 de la cuve 100 (figures 2, 3, 7 et 8).

Le couvercle 10 peut être articulé sur la collerette 200 par l'intermédiaire de la première partie de couvercle 11, tandis que la deuxième partie de couvercle 12 est maintenue axialement sur la première partie de couvercle 11.

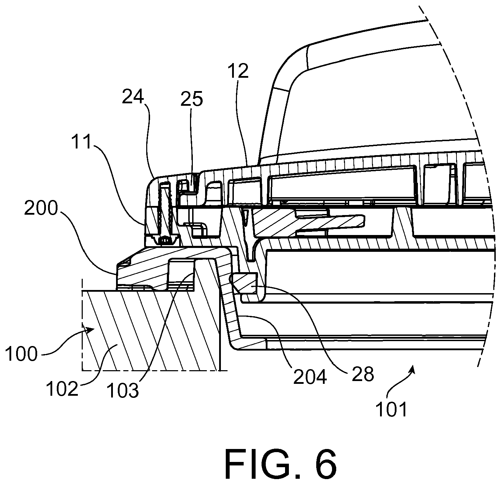

Pour cela, des secteurs de couvercle 24 sont par exemple prévus (figures 1 à 8). Ces secteurs de couvercle 24 sont montés solidaires avec la première partie de couvercle 11, notamment par vissage, et comprennent chacun une portion de maintien 25 agencée axialement en regard avec la deuxième partie de couvercle 12, et située axialement d'un côté opposé de la première partie de couvercle 11, par rapport à la deuxième partie de couvercle 12 (figures 4 et 6). Les secteurs de couvercle 24 sont par exemple rapportés sur la périphérie des première et deuxième partie de couvercle 11, 12.

Des écrous à sertir (non représentés) sont par exemple aussi prévus pour fixer la collerette 200 au rebord d'ouverture 102 de la cuve 100. De tels écrous présentent une résistance à l'arrachement supérieure à celle des rivets ou vis standards. Ainsi, la collerette 200 et le couvercle 10 peuvent plus difficilement être arrachés de la cuve 100, notamment lorsque l'engin agricole freine ou qu'il prend un virage à vitesse élevée et que le produit phytosanitaire ou l'engrais liquide contenu dans la cuve 100 fait des vagues qui tendent à éjecter la collerette 200 et le couvercle 10. De plus, de tels écrous permettent un démontage non destructif du sous-ensemble comprenant la collerette 200 et le couvercle 10. Ces écrous à sertir sont par exemple en acier inoxydable.

Les organes de blocage 13 comprennent par exemple chacun un corps 26 muni d'une griffe 27 coopérant avec la surface radialement extérieure 103 du rebord d'ouverture 102 de la cuve 100, notamment avec la surface radialement extérieure 201 de la collerette 200, pour bloquer axialement le couvercle 10 par rapport à la cuve 100, lorsque l'organe de blocage 13 occupe sa position de blocage (figures 4 et 5).

Pour cela, la griffe 27 de chacun des organes de blocage 13 est par exemple conçue pour se loger dans une encoche 203 creusant, globalement radialement, la surface radialement extérieure 103 du rebord d'ouverture 102 de la cuve 100, notamment la surface radialement extérieure 201 de la collerette 200, lorsque l'organe de blocage 13 occupe sa position de blocage, et pour libérer l'encoche 203, lorsque l'organe de blocage 13 occupe sa position de déblocage (figures 1, 4 et 5).

La surface radialement extérieure 103, 201 de la cuve 100 ou de la collerette 200 est par exemple pourvue d'une pluralité d'encoches 203 réparties autour de l'axe de pivotement 14, chacune des encoches 203 étant conçue pour loger la griffe 27 d'un ou plusieurs organes de blocage 13, lorsque l'organe de blocage 13 occupe sa position de blocage.

En variante (non représentée), la surface radialement extérieure 103, 201 de la cuve 100 ou de la collerette 200 est pourvue d'une unique encoche conçue pour loger la griffe 27 de tous les organes de blocage 13, lorsque les organes de blocage 13 occupent leur position de blocage.

La griffe 27 de chacun des organes de blocage 13 présente par exemple une première portion 29 s'étendant globalement axialement depuis le corps 26 de l'organe de blocage 13 et une deuxième portion 30 s'étendant dans le prolongement de la première portion 29, globalement radialement vers l'axe de pivotement 14 et à distance du corps 26. La griffe 27 est ainsi repliée ou encore rabattue sur le corps 26.

La griffe 27 de chacun des organes de blocage 13 s'étend par exemple sur un secteur angulaire compris entre 20 et 60° inclus, notamment égal à 30°.

Les griffes 27 des organes de blocage 13 couvrent par exemple ensemble ou encore en cumulé un secteur angulaire supérieur à 180°, notamment égal à 210°.

Le couvercle 10 comprend par exemple ici sept organes de blocage 13 comprenant chacun une griffe 27 couvrant un secteur angulaire de 30°, les griffes 27 couvrant ainsi en cumulé un secteur angulaire de 210°. Le secteur angulaire restant, qui correspond à 150°, est par exemple utilisé par les deuxièmes rainures 23 (105°), ainsi que par l'articulation du couvercle 10 sur la collerette 200 (45°).

Il est entendu ici qu'à défaut de collerette 200, les griffes 27 des organes de blocage 13 coopèrent avec la surface radialement extérieure 103 du rebord d'ouverture 102 de la cuve 100, dans laquelle une ou plusieurs encoches peuvent être creusées, globalement radialement.

Le couvercle 10 peut encore comprendre un joint d'étanchéité 28 annulaire logé dans une gorge creusée, globalement radialement, dans la première partie de couvercle 11, et conçu pour coopérer avec une surface radialement intérieure 204 de la collerette 200 (figures 4 et 6), lorsque le couvercle 10 est en position de fermeture.

Le couvercle 10 comprend par exemple encore un mécanisme de verrouillage 31, 32, 33, 41 montré en détail aux figures 10 à 16. Le mécanisme de verrouillage 31, 32, 33, 41 est aussi visibles sur les figures 7 et 8.

Le mécanisme de verrouillage 31, 32, 33, 41 est conçu pour verrouiller automatiquement le pivotement de la deuxième partie de couvercle 12, par rapport à la première partie de couvercle 11, dans le deuxième sens de pivotement P2 allant de la deuxième position angulaire de blocage vers la première position angulaire de déblocage, lorsque la deuxième partie de couvercle 12 atteint la deuxième position angulaire de blocage. Le mécanisme de verrouillage 31, 32, 33, 41 verrouille donc automatiquement la deuxième partie de couvercle 12 dans la deuxième position angulaire de blocage.

De cette manière, lorsque la deuxième partie de couvercle 12 atteint la deuxième position angulaire de blocage et que les organes de blocage 13 bloquent axialement le couvercle 10 sur la cuve 100, notamment via la collerette 200, le mécanisme de verrouillage 31, 32, 33, 41 empêche la deuxième partie de couvercle 12 de pivoter vers la première position angulaire de déblocage et donc au couvercle 10 de se débloquer axialement de manière intempestive.

En outre, le mécanisme de verrouillage 31, 32, 33, 41 s'enclenche automatiquement, lorsque la deuxième partie de couvercle 12 atteint la deuxième position angulaire de blocage, de sorte que le verrouillage de la deuxième partie de couvercle 12 est plus fiable et plus sûr qu'un verrouillage manuel. En particulier, le verrouillage de la deuxième partie de couvercle 12 ne dépend plus de l'intensité d'un couple de verrouillage à appliquer à la deuxième partie de couvercle 12, comme c'est par exemple le cas dans l'art antérieur pour coincer le filet extérieur du couvercle 10 avec le filet intérieur de la cuve 100 l'un avec l'autre.

Pour cela, le mécanisme de verrouillage 31, 32, 33, 41 comprend par exemple un organe de verrouillage 31, un deuxième organe d'entraînement 32 et un organe de rappel élastique 33.

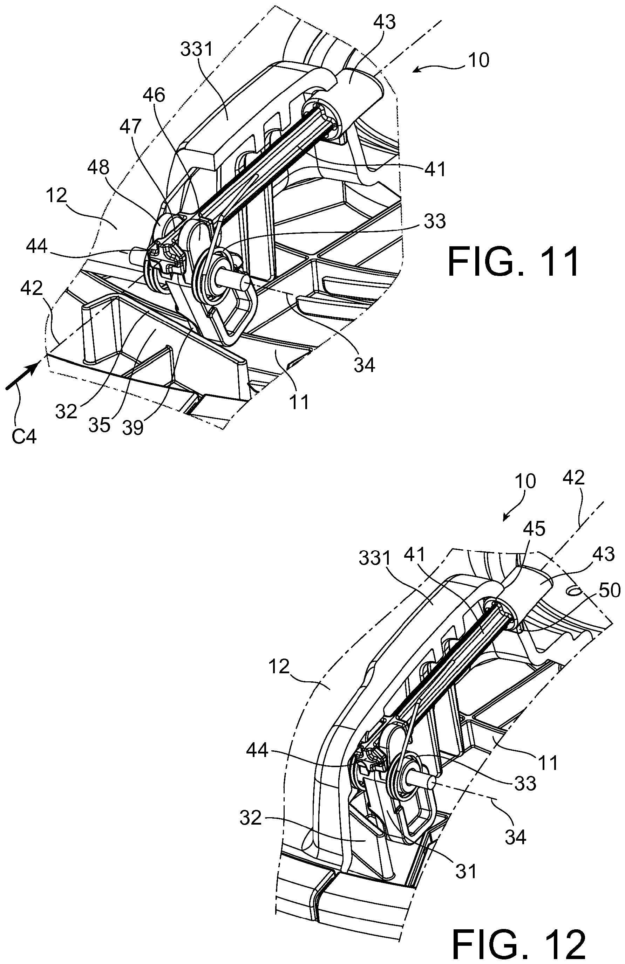

L'organe de verrouillage 31 est monté mobile sur l'une des première et deuxième parties de couvercle 11, 12 entre une position de repos (figures 10, 12, 13 et 15) et une position contrainte (figures 11, 14 et 16) dans laquelle le organe de rappel élastique 33 rappelle l'organe de verrouillage 31 en déplacement vers la position de repos.

Le deuxième organe d'entraînement 32 est solidaire de l'autre des première et deuxième parties de couvercle 12, 11.

Dans la suite de la description, l'organe de verrouillage 31 sera décrit monté mobile sur la deuxième partie de couvercle 12, et le deuxième organe d'entraînement 32 sera décrit solidaire de la première partie de couvercle 11, sans que cela ne soit limitatif. Ainsi, il est entendu que l'homme du métier saura adapter la description qui suit au cas où l'organe de verrouillage 31 est monté mobile sur la première partie de couvercle 11, et le deuxième organe d'entraînement 32 est solidaire de la deuxième partie de couvercle 12. D'une part, le deuxième organe d'entraînement 32 est conçu pour entraîner l'organe de verrouillage 31 en déplacement depuis la position de repos vers la position contrainte, lorsque la deuxième partie de couvercle 12 pivote depuis la première position angulaire de déblocage vers la deuxième position angulaire de blocage.

En variante (non représentée), le deuxième organe d'entraînement 32 est conçu pour maintenir l'organe de verrouillage 31 en position contrainte, lorsque la deuxième partie de couvercle 12 pivote depuis la première position angulaire de déblocage vers la deuxième position angulaire de blocage.

D'autre part, le deuxième organe d'entraînement 32 est conçu pour relâcher l'organe de verrouillage 31, lorsque la deuxième partie de couvercle 12 atteint la deuxième position angulaire de blocage, l'organe de verrouillage 31 se déplaçant ainsi depuis la position contrainte vers la position de repos sous l'effet de l'organe de rappel élastique 33.

L'organe de verrouillage 31 est encore conçu pour venir en butée contre la première partie de couvercle 11, lorsque la deuxième partie de couvercle 12 atteint la deuxième position angulaire de blocage et que l'organe de verrouillage 31 se déplace depuis la position contrainte vers la position de repos sous l'effet de l'organe de rappel élastique 33, de sorte à verrouiller le pivotement de la deuxième partie de couvercle 12 depuis la deuxième position angulaire de blocage vers la première position angulaire de déblocage (figures 10, 13 et 15).

De cette manière, l'organe de rappel élastique 33 assure le verrouillage automatique de la deuxième partie de couvercle 12 en rappelant l'organe de verrouillage 31 vers la position de repos, en butée contre la première partie de couvercle 11, lorsque la deuxième partie de couvercle 12 atteint la deuxième position angulaire de blocage.

De plus, l'organe de rappel élastique 33 empêche le déverrouillage de la deuxième partie de couvercle 12 puisqu'il maintient l'organe de verrouillage 31 en position de repos, en butée contre la première partie de couvercle 11, lorsque la deuxième partie de couvercle 12 occupe la deuxième position angulaire de blocage.

Le mécanisme de verrouillage 31, 32, 33, 41 est par exemple axialement interposé entre les première et deuxième parties de couvercle 11, 12, de sorte à être logé dans l'espace intérieur du couvercle 10.

Pour cela, la deuxième partie de couvercle 12 comprend par exemple au moins un organe de préhension 331, notamment deux agencés de manière diamétralement opposée par rapport à l'axe de pivotement 14, faisant saillie vers l'extérieur du couvercle 10, le ou l'un des organes de préhension 331 logeant en outre le mécanisme de verrouillage 31, 32, 33, 41. Les organes de préhension 331 permettent à un utilisateur de manipuler la deuxième partie de couvercle 12, notamment pour la pivoter.

L'organe de verrouillage 31 est par exemple monté basculant sur la deuxième partie de couvercle 12, entre la position de repos et la position contrainte, autour d'un axe de basculement 34 orienté circonférentiellement. L'organe de verrouillage 31 bascule ainsi par rapport à la deuxième partie de couvercle 12, depuis la position de repos vers sa position contrainte dans un premier sens de basculement B1, et depuis sa position contrainte vers sa position de repos dans un deuxième sens de basculement B2 opposé au premier sens de basculement B1.

En variante (non représentée), l'organe de verrouillage 31 est monté coulissant sur la deuxième partie de couvercle 12, entre la position de repos et la position contrainte, suivant un axe de coulissement orienté axialement ou radialement.

Le deuxième organe d'entraînement 32 peut former une came coopérant, notamment par glissement, avec l'organe de verrouillage 31 formant ainsi lui-même un suiveur de came.

Pour cela, le deuxième organe d'entraînement 32 présente par exemple la forme d'une rampe portée par la première partie de couvercle 11 (figures 10, 12, 15 et 16).

La rampe 32 comprend une deuxième surface d'entraînement ou encore de came 35 par l'intermédiaire de laquelle l'organe de verrouillage 31 est entraîné en déplacement, notamment en basculement, depuis la position de repos vers la position contrainte, ou est maintenu en position contrainte, lorsque la deuxième partie de couvercle 12 pivote depuis la première position angulaire de déblocage vers la deuxième position angulaire de blocage. La deuxième surface d'entraînement 35 de la rampe 32 relâche en outre l'organe de verrouillage 31, lorsque la deuxième partie de couvercle 12 atteint la deuxième position angulaire de blocage.

L'organe de verrouillage 31 est encore conçu pour glisser sur la deuxième surface d'entraînement 35 de la rampe 32, suivant une ligne de glissement 36, lorsque la deuxième partie de couvercle 12 pivote depuis la première position angulaire de déblocage vers la deuxième position angulaire de blocage. L'organe de rappel élastique 33 permet de maintenir le contact entre l'organe de verrouillage 31 et la deuxième surface d'entraînement 35 de la rampe 32.

La ligne de glissement 36 est par exemple rectiligne, formant ainsi un axe de glissement.

En variante (non représentée), la ligne de glissement 36 est courbe.

La rampe 32 s'étend suivant la ligne de glissement 36 entre une première extrémité 37 et une deuxième extrémité 38 opposée, vers laquelle l'organe de verrouillage 31 glisse, lorsque la deuxième partie de couvercle 12 pivote vers la deuxième position angulaire de blocage.

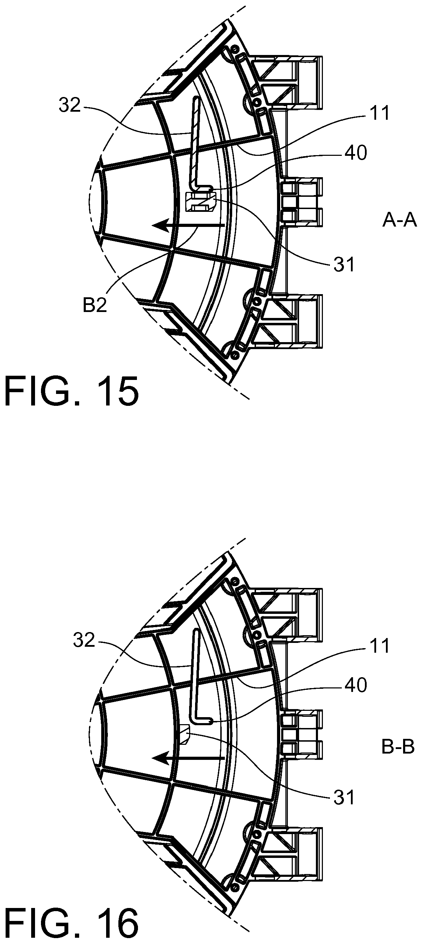

Par exemple, notamment lorsque l'organe de verrouillage 31 bascule ou coulisse radialement, la ligne de glissement 36 est comprise dans un plan orthogonal à l'axe de pivotement 14. La deuxième extrémité 38 est en outre d'une part radialement décalée de la première extrémité 37, et d'autre part circonférentiellement écartée de la première extrémité 37 dans le premier sens de pivotement P1 (figures 15 et 16). La rampe 32 se décale encore radialement et circonférentiellement suivant la ligne de glissement 36, depuis sa première extrémité 37 vers sa deuxième extrémité 38, de manière progressive. La rampe 32 assure ainsi l'entraînement en basculement ou en coulissement radial de l'organe de verrouillage 31, depuis la position de repos vers la position contrainte.

En variante (non représentée), notamment lorsque l'organe de verrouillage 31 coulisse axialement, la ligne de glissement 36 est sécante avec un plan orthogonal à l'axe de pivotement 14, sans être parallèle à l'axe de pivotement 14. La deuxième extrémité 38 est en outre d'une part axialement décalée de la première extrémité 37, et d'autre part circonférentiellement écartée de la première extrémité 37 dans le premier sens de pivotement P1. La rampe 32 se décale encore axialement et circonférentiellement suivant la ligne de glissement 36, depuis sa première extrémité 37 vers sa deuxième extrémité 38, de manière progressive. La rampe 32 assure ainsi l'entraînement en coulissement axial de l'organe de verrouillage 31, depuis la position de repos vers la position contrainte.

Encore en variante (non représentée), lorsque la rampe 32 maintient l'organe de verrouille 31 en position contrainte, la rampe 32 ne se décale que circonférentiellement suivant la ligne de glissement 32.

De cette manière, lorsque la deuxième partie de couvercle 12 pivote vers la deuxième position angulaire de blocage, l'organe de verrouillage 31 glisse le long de la rampe 32 suivant la ligne de glissement 36, notamment vers la deuxième extrémité 38 de ladite rampe 32, de sorte à être entraîné en déplacement, notamment en basculement, vers la position contrainte ou à être maintenu en position contrainte (figure 11).

Lorsque la deuxième partie de couvercle 12 atteint la deuxième position angulaire de blocage, la rampe 32, notamment sa deuxième extrémité 38, relâche l'organe de verrouillage 31 qui, sous l'effet de l'organe de rappel élastique 33, se déplace, notamment bascule, vers la position de repos et vient en butée contre la première partie de couvercle 11, de sorte à bloquer la deuxième partie de couvercle 12 en pivotement vers la première position angulaire de déblocage (figures 10, 13 et 15).

L'organe de verrouillage 31 comprend par exemple aussi une surface biseautée 39 par l'intermédiaire de laquelle l'organe de verrouillage 31 glisse sur la deuxième surface d'entraînement 35 de la rampe 32 (figure 11). Cela permet de limiter les frottements entre l'organe de verrouillage 31 et la rampe 32, et ainsi d'éviter un grippage du couvercle 10.

La première partie de couvercle 11 peut encore comprendre une surface de butée 40 orientée circonférentiellement dans le premier sens de pivotement P1 vers la deuxième position angulaire de blocage et contre laquelle l'organe de verrouillage 31 vient en butée, lorsque la deuxième partie de couvercle 12 atteint la deuxième position angulaire de blocage et que l'organe de verrouillage 31 se déplace depuis la position contrainte vers la position de repos sous l'effet de l'organe de rappel élastique 33 (figures 10 et 13 à 16).

La surface de butée 40 est par exemple formée sur la rampe 32, notamment dans le prolongement de sa deuxième extrémité 38. La deuxième surface d'entraînement 35 et la surface de butée 40 peuvent en outre globalement former ensemble un L.

Le mécanisme de verrouillage 31, 32, 33, 41 peut aussi comprendre un organe de déverrouillage 41 conçu pour déverrouiller manuellement le pivotement de la deuxième partie de couvercle 12, par rapport à la première partie de couvercle 11, depuis la deuxième position angulaire de blocage vers la première position angulaire de déblocage, lorsque la deuxième partie de couvercle 12 est dans la deuxième position angulaire de blocage. L'organe de déverrouillage 41 est ainsi actionnable manuellement, notamment depuis l'extérieur du couvercle 10.

De cette manière, le déverrouillage de la deuxième partie de couvercle 12 dans la deuxième position angulaire de blocage impose un actionnement manuel et donc l'intervention d'un utilisateur. Cela rend le mécanisme de verrouillage 31, 32, 33, 41 plus fiable et plus sûr.

Pour cela, l'organe de déverrouillage 41 est par exemple conçu pour entraîner l'organe de verrouillage 31 en déplacement, notamment en basculement, depuis la position de repos vers la position contrainte.

De cette manière, l'organe de déverrouillage 41 permet de libérer l'organe de verrouillage 31 de la butée formée par la première partie de couvercle 11, lorsque la deuxième partie de couvercle 12 occupe la deuxième position angulaire de blocage, et ainsi de pivoter la deuxième partie de couvercle 12 vers la première position angulaire de déblocage.

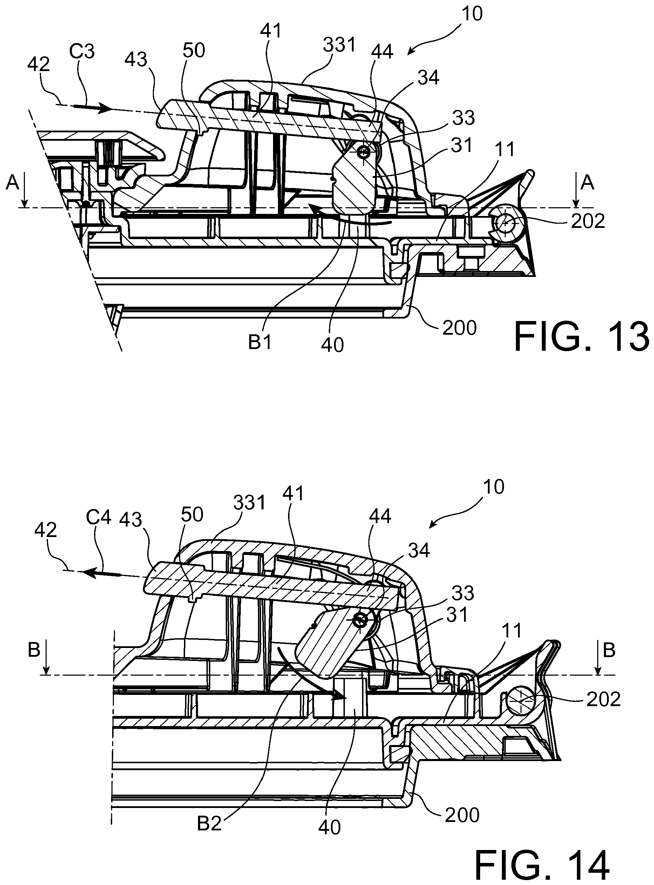

Une fois l'organe de verrouillage 31 libéré par l'organe de déverrouillage 41 de la butée formée par la première partie de couvercle 11 (figures 14 et 15), un léger pivotement de la deuxième partie de couvercle 12 vers la première position angulaire de déblocage permet de replacer l'organe de verrouillage 31 sur la rampe 32, notamment en contact avec la deuxième surface d'entraînement 35. L'organe de verrouillage 31 peut alors glisser le long de la rampe 32 suivant la ligne de glissement 36, notamment vers la première extrémité 37 de ladite rampe 32, lorsque la deuxième partie de couvercle 12 pivote vers la première position angulaire de déblocage.

L'organe de déverrouillage 41 présente par exemple la forme d'un bouton poussoir, monté coulissant sur la deuxième partie de couvercle 12 suivant un axe de coulissement 42, entre une position relâchée (figure 13) dans laquelle l'organe de verrouillage 31 est en position de repos et une position activée (figure 14) dans laquelle l'organe de verrouillage 31 est en position contrainte. Le bouton poussoir 41 coulisse depuis la position relâchée vers la position activée dans un troisième sens de coulissement C3, et depuis la position activée vers la position relâchée dans un quatrième sens de coulissement C4 opposé au troisième sens de coulissement C3.

Une projection orthogonale de l'axe de coulissement 42 sur un plan orthogonal à l'axe de pivotement 14 est par exemple orientée radialement.

Le bouton poussoir 41 forme une tige s'étendant suivant l'axe de coulissement 42 entre une première extrémité 43 et une deuxième extrémité 44 opposée, par l'intermédiaire de laquelle le bouton poussoir 41 entraîne en déplacement l'organe de verrouillage 31 depuis la position de repos vers la position contrainte.

La première extrémité 43 du bouton poussoir 41 fait par exemple saillie depuis la deuxième partie de couvercle 12, notamment depuis l'organe de préhension 331 logeant le mécanisme de verrouillage 31, 32, 33, 41, à l'extérieur du couvercle 10. Un orifice 45 réalisé dans la deuxième partie de couvercle 12, notamment dans l'organe de préhension 331, peut être prévu à cet effet. Cela permet à l'utilisateur de presser manuellement le bouton poussoir 41, depuis l'extérieur du couvercle 10, vers la position activée, de sorte à entraîner l'organe de verrouillage 31 en déplacement vers la position contrainte et ainsi déverrouiller le pivotement de la deuxième partie de couvercle 12 vers la première position angulaire de déblocage.

La première extrémité 43 du bouton poussoir 41 peut en outre être orientée vers l'axe de pivotement 14.

La deuxième extrémité 44 du bouton poussoir 41 porte une première face 46, perpendiculaire à l'axe de coulissement 42 et orientée vers l'organe de verrouillage 31 d'un côté opposé à la première extrémité 43 du bouton poussoir 41. La première face 46 du bouton poussoir 41 est en outre conçue pour pousser l'organe de verrouillage 31 suivant l'axe de coulissement 42, lorsque le bouton poussoir 41 coulisse vers la position activée, de sorte à entraîner l'organe de verrouillage 31 en déplacement vers la position contrainte.

De cette manière, lorsque le bouton poussoir 41 coulisse vers la position activée, notamment parce qu'il est pressé par un utilisateur, la première face 46 de la deuxième extrémité 44 du bouton poussoir 41 pousse l'organe de verrouillage 31, qui se déplace, notamment qui bascule, depuis la position de repos vers la position contrainte. Cela permet notamment de libérer l'organe de verrouillage 31 de la butée formée par la première partie de couvercle 11, lorsque la deuxième partie de couvercle 12 occupe la deuxième position angulaire de blocage, et ainsi de pivoter la deuxième partie de couvercle 12 vers la première position angulaire de déblocage.

L'organe de verrouillage 31 peut aussi comprendre deux oreilles 47, 48 agencées circonférentiellement à distance l'une de l'autre et entre lesquelles la deuxième extrémité 44 du bouton poussoir 41 s'étend suivant l'axe de coulissement 42 jusqu'à une deuxième face 49 agencée parallèlement, à distance et en regard de la première face 46. Les oreilles 47, 48 sont logées entre les première et deuxième faces 46, 49 de la deuxième extrémité 44 du bouton poussoir 41.

L'organe de rappel élastique 33 est par exemple aussi conçu pour rappeler le bouton poussoir 41 vers la position relâchée.

De cette manière, à défaut d'être pressé par un utilisateur vers la position activée, le bouton poussoir 41 occupe la position relâchée.

L'organe de rappel élastique 33 peut rappeler directement ou indirectement le bouton poussoir 41 vers la position relâchée.

Lorsque l'organe de rappel élastique 33 rappelle directement le bouton poussoir 41 vers la position relâchée, il est monté entre la deuxième partie de couvercle 12 et le bouton poussoir 41. L'organe de rappel élastique 33 rappelle alors l'organe de verrouillage 31 vers la position de repos, indirectement, via le bouton poussoir 41, notamment via la deuxième face 49 du bouton poussoir 41.

Lorsque l'organe de rappel élastique 33 rappelle indirectement le bouton poussoir 41 vers la position relâchée, il est monté entre la deuxième partie de couvercle 12 et l'organe de verrouillage 31. L'organe de rappel élastique 33 rappelle alors le bouton poussoir 41 vers la position relâchée, indirectement, via l'organe de verrouillage 31, qui pousse la première face 46 du bouton poussoir 41 vers la position relâchée.

L'organe de rappel élastique 33 présente par exemple la forme d'un ressort de rappel, notamment d'un ressort de torsion, lorsque l'organe de verrouillage 31 est monté basculant.

Le bouton poussoir 41 porte par exemple encore une saillie 50 s'étendant radialement par rapport à l'axe de coulissement 42 et conçue pour venir en butée contre la deuxième partie de couvercle 12, notamment contre un rebord de l'orifice 45, lorsque le bouton poussoir 41 coulisse vers la position relâchée (figures 13 et 14).

De cette manière, la saillie 50 du bouton poussoir 41 évite que le bouton poussoir 41 s'échappe du couvercle 10, par l'orifice 45, lorsqu'il coulisse vers la position relâchée sous l'effet de l'organe de rappel élastique 33.

Les première et deuxième partie de couvercle 11, 12 sont par exemple réalisées à partir de polypropylène (aussi appelé « PP »), de sorte à leur conférer de la flexibilité pour s'adapter aux déformations de la cuve 100. Le polypropylène est par exemple chargé de 20% en poids de talc, afin de limiter les frottements avec les organes de blocage 13.

La collerette 200 est par exemple aussi réalisée en polypropylène, notamment chargé de 20% en poids de talc.

Les organes de blocage 13 et le cas échéant, l'organe de verrouillage 31 et le bouton poussoir 41, sont par exemple réalisés à partir de polyamide (aussi appelé « PA »), notamment de PA6.6 chargé de 30% en poids de fibres de verre.

L'organe de rappel élastique 33 est par exemple réalisé à partir d'acier inoxydable.

Le couvercle 10 décrit ci-dessus est particulièrement avantageux car il met en œuvre des organes de blocage 13 qui coopèrent avec une surface radialement extérieure 103 de la cuve 100, notamment par l'intermédiaire d'une collerette 200 et de sa surface radialement extérieure 201, pour bloquer axialement le couvercle 10 sur la cuve 100.

## Revendications

1. Couvercle (10) pour cuve (100) destinée à contenir un produit phytosanitaire ou un engrais liquide, le couvercle (10) étant destiné à obturer une ouverture (101) de la cuve (100) définie par un rebord d'ouverture (102), le couvercle (10) comprenant :
- une première partie de couvercle (11),
- une deuxième partie de couvercle (12) montée pivotante sur la première partie de couvercle (11) autour d'un axe de pivotement (14) de direction axiale, entre une première position angulaire de déblocage du couvercle (10) et une deuxième position angulaire de blocage du couvercle (10) dans laquelle le couvercle (10) est destiné à être bloqué axialement sur le rebord d'ouverture (102) de la cuve (100) s'étendant autour de l'axe de pivotement (14),
- une pluralité d'organes de blocage (13) répartis autour de l'axe de pivotement (14),
le couvercle (10) étant **caractérisé en ce que** chacun des organes de blocage (13) est monté mobile par rapport aux première et deuxième parties de couvercle (11, 12) entre une position de déblocage et une position de blocage dans laquelle l'organe de blocage (13) est radialement plus rapproché de l'axe de pivotement qu'en position débloquée et dans laquelle il est destiné à coopérer avec une surface radialement extérieure (103) du rebord d'ouverture (102) de la cuve (100) pour bloquer axialement le couvercle (10) par rapport à la cuve (100), le couvercle (10) étant conçu de manière à ce que chacun des organes de blocage (13) soit déplacé de sa position de déblocage vers sa position de blocage, lorsque la deuxième partie de couvercle (12) pivote depuis la première position angulaire de déblocage vers la deuxième position angulaire de blocage.

2. Couvercle (10) selon la revendication 1, comprenant un mécanisme de transformation de mouvement (15, 23) conçu pour transformer le pivotement de la deuxième partie de couvercle (12), par rapport à la première partie de couvercle (11), depuis la première position angulaire de déblocage vers la deuxième position angulaire de blocage, en déplacement de chacun des organes de blocage (13), par rapport à la première partie de couvercle (11), depuis sa position de déblocage vers sa position de blocage.

3. Couvercle (10) selon la revendication 2, dans lequel :
- le mécanisme de transformation de mouvement (15, 23) comprend au moins un premier organe d'entraînement (15) porté par la deuxième partie de couvercle (12) et coopérant avec les organes de blocage (13) ou chacun avec l'un ou plusieurs des organes de blocage (13),
- le ou chacun des premiers organes d'entraînement (15) est conçu pour entraîner le ou les organes de blocage (13) avec lesquels il coopère, en déplacement par rapport à la première partie de couvercle (11), depuis leur position de déblocage vers leur position de blocage, lorsque la deuxième partie de couvercle (12) pivote depuis la première position angulaire de déblocage vers la deuxième position angulaire de blocage.

4. Couvercle (10) selon la revendication 3, dans lequel le ou chacun des premiers organes d'entraînement (15) forme une came coopérant avec l'un, plusieurs ou les organes de blocage (13) formant ainsi eux-mêmes des suiveurs de came.

5. Couvercle (10) selon la revendication 3 ou la revendication 4, dans lequel :
- le ou chacun des premiers organes d'entraînement (15) présente la forme d'une première rainure s'étendant suivant une ligne d'extension (17), comprise dans un plan orthogonal à l'axe de pivotement (14), entre une première extrémité (20) et une deuxième extrémité (21) opposée,
- la ou chacune des premières rainures (15) comprend au moins une première surface d'entraînement (18, 19) par l'intermédiaire de laquelle un, plusieurs ou les organes de blocage (13) sont entraînés en déplacement, par rapport à la première partie de couvercle (11), entre leur position de déblocage et leur position de blocage, lorsque la deuxième partie de couvercle (12) pivote entre la première position angulaire de déblocage et la deuxième position angulaire de blocage.

6. Couvercle (10) selon la revendication 5, dans lequel la ligne d'extension (17) de la ou de chacune des premières rainures (15) présente la forme d'une spirale.

7. Couvercle (10) selon la revendication 5 ou la revendication 6, dans laquelle les premières rainures (15) sont plus resserrées au niveau de leur deuxième extrémité (21) vers laquelle les organes de blocage (13) se déplacent, lorsque la deuxième partie de couvercle (12) pivote vers la première position angulaire de déblocage, qu'au niveau de leur première extrémité (20) et qu'entre leurs première et deuxième extrémités (20, 21).

8. Couvercle (10) selon l'une des revendications 5 à 7, dans lequel les deux premières rainures (15) avec lesquelles coopèrent chaque paire d'organes de blocage (13) circonférentiellement adjacents autour de l'axe de pivotement (14) sont décalées radialement l'une de l'autre par rapport à l'axe de pivotement (14).

9. Couvercle (10) selon l'une des revendications 1 à 8, dans lequel chacun des organes de blocage (13) est monté coulissant, par rapport à la première partie de couvercle (11), entre sa position de déblocage et sa position de blocage, suivant une ligne de coulissement (16).

10. Couvercle (10) selon la revendication 9, dans lequel chacune des lignes de coulissement (16) est rectiligne et comprise dans un plan orthogonal à l'axe de pivotement (14), de sorte à former un axe de coulissement radial par rapport à l'axe de pivotement (14).

11. Couvercle (10) selon l'une des revendications 1 à 10, comprend un mécanisme de verrouillage (31, 32, 33, 41) conçu pour verrouiller automatiquement le pivotement de la deuxième partie de couvercle (12), par rapport à la première partie de couvercle (11), dans un sens de pivotement (P2) allant de la deuxième position angulaire de blocage vers la première position angulaire de déblocage, lorsque la deuxième partie de couvercle (12) atteint la deuxième position angulaire de blocage.

12. Couvercle (10) selon la revendication 11, dans lequel le mécanisme de verrouillage (31, 32, 33, 41) comprend :
- un organe de verrouillage (31) monté mobile sur l'une des première et deuxième parties de couvercle (12, 11) entre une position de repos et une position contrainte dans laquelle un organe de rappel élastique (33) rappelle l'organe de verrouillage (31) en déplacement vers la position de repos,
- un deuxième organe d'entraînement (32) solidaire de l'autre des première et deuxième parties de couvercle (11, 12), et conçu d'une part pour entraîner l'organe de verrouillage (31) en déplacement depuis la position de repos vers la position contrainte ou pour maintenir l'organe de verrouillage (31) en position contrainte, lorsque la deuxième partie de couvercle (12) pivote depuis la première position angulaire de déblocage vers la deuxième position angulaire de blocage, et d'autre part pour relâcher l'organe de verrouillage (31), lorsque la deuxième partie de couvercle (12) atteint la deuxième position angulaire de blocage,
et dans lequel l'organe de verrouillage (31) est conçu pour venir en butée contre l'autre des première et deuxième parties de couvercle (11, 12), lorsque la deuxième partie de couvercle (12) atteint la deuxième position angulaire de blocage et que l'organe de verrouillage (31) se déplace depuis la position contrainte vers la position de repos sous l'effet de l'organe de rappel élastique (33), de sorte à verrouiller automatiquement le pivotement de la deuxième partie de couvercle (12) dans le sens de pivotement (P2) allant de la deuxième position angulaire de blocage vers la première position angulaire de déblocage.

13. Couvercle (10) selon la revendication 12, dans lequel le deuxième organe d'entraînement (32) forme une came coopérant avec l'organe de verrouillage (31) formant ainsi lui-même un suiveur de came.

14. Couvercle (10) selon la revendication 12 ou la revendication 13, dans lequel le deuxième organe d'entraînement (32) présente la forme d'une rampe portée par l'autre des première et deuxième parties de couvercle (11, 12) et comprenant une deuxième surface d'entraînement (35) par l'intermédiaire de laquelle l'organe de verrouillage (31) est entraîné en déplacement depuis la position de repos vers la position contrainte, ou est maintenu en position contrainte, lorsque la deuxième partie de couvercle (12) pivote depuis la première position angulaire de déblocage vers la deuxième position angulaire de blocage.

15. Couvercle (10) selon l'une des revendications 11 à 14, dans lequel le mécanisme de verrouillage (31, 32, 33, 41) comprend un organe de déverrouillage (41) conçu pour déverrouiller manuellement le pivotement de la deuxième partie de couvercle (12), par rapport à la première partie de couvercle (11), dans le sens de pivotement allant de la deuxième position angulaire de blocage vers la première position angulaire de déblocage, lorsque la deuxième partie de couvercle (12) occupe dans la deuxième position angulaire de blocage.

16. Couvercle (10) selon la revendication 15, dans lequel l'organe de déverrouillage (41) est conçu pour entraîner l'organe de verrouillage (31) en déplacement depuis la position de repos vers la position contrainte.

17. Couvercle (10) selon la revendication 16, dans lequel l'organe de déverrouillage (41) présente la forme d'un bouton poussoir, monté coulissant sur l'une des première et deuxième parties de couvercle (12, 11) suivant un axe de coulissement (42), entre une position relâchée dans laquelle l'organe de verrouillage (31) est en position de repos et une position activée dans laquelle l'organe de verrouillage (31) est en position contrainte.

18. Couvercle (10) selon la revendication 17, dans lequel le bouton poussoir (41) forme une tige s'étendant suivant l'axe de coulissement (42) entre une première extrémité (43) et une deuxième extrémité (44) opposée, par l'intermédiaire de laquelle le bouton poussoir (41) entraîne en déplacement l'organe de verrouillage (31) depuis la position de repos vers la position contrainte.

19. Couvercle (10) selon la revendication 18, dans laquelle le mécanisme de verrouillage (31, 32, 33, 41) est axialement interposé entre les première et deuxième parties de couvercle (11, 12), de sorte à être logé à l'intérieur du couvercle (10), et dans lequel la première extrémité (43) du bouton poussoir (41) fait saillie depuis l'une des première et deuxième parties de couvercle (12, 11), à l'extérieur du couvercle (10).

20. Couvercle (10) selon l'une des revendications 12 à 14 en combinaison avec l'une des revendications 17 à 19, dans lequel l'organe de rappel élastique (33) est aussi conçu pour rappeler le bouton poussoir (41) vers la position relâchée.

21. Sous-ensemble pour cuve (100), destinée à contenir un produit phytosanitaire ou un engrais liquide, comprenant un couvercle (10) selon l'une des revendications 1 à 20, et une collerette (200) annulaire, s'étendant autour de l'axe de pivotement (14) et destinée à être fixée au rebord d'ouverture (102) de la cuve (100), les organes de blocage (13) coopérant en outre avec la surface radialement extérieure (103) du rebord d'ouverture (102) de la cuve (100) par l'intermédiaire de la collerette (200), lorsque les organes de blocage (13) occupent leur position de blocage.

22. Sous-ensemble selon la revendication 21, comprenant en outre des écrous à sertir destinés à fixer la collerette (200) au rebord d'ouverture (102) de la cuve (100).

23. Sous-ensemble selon la revendication 21 ou la revendication 22, dans lequel les organes de blocage (13) comprennent chacun un corps (26) muni d'une griffe (27) conçue pour se loger dans une encoche (203) creusée, globalement radialement par rapport à l'axe de pivotement (14), dans une surface radialement extérieure (201) de la collerette (200), lorsque l'organe de blocage (13) occupe sa position de blocage, et pour libérer l'encoche (203), lorsque l'organe de blocage (13) occupe sa position de déblocage.

24. Ensemble comprenant une cuve (100) destinée à contenir un produit phytosanitaire ou un engrais liquide ainsi qu'un couvercle (10) selon l'une des revendications 1 à 20 ou un sous-ensemble selon l'une des revendications 21 à 23.

## Patentansprüche

1. Deckel (10) für einen Tank (100), der bestimmt ist, ein Pflanzenschutzmittel oder einen flüssigen Dünger zu enthalten, wobei der Deckel (10) bestimmt ist, eine Öffnung (101) des Tanks (100) zu verschließen, die von einem Öffnungsrand (102) definiert ist, wobei der Deckel (10) umfasst:
- einen ersten Deckelteil (11),
- einen zweiten Deckelteil (12), der auf dem ersten Deckelteil (11) um eine Schwenkachse (14) axialer Richtung zwischen einer ersten Löse-Winkelposition des Deckels (10) und einer zweiten Arretierungs-Winkelposition des Deckels (10) schwenkend angebracht ist, in welcher der Deckel (10) bestimmt ist, axial auf dem Öffnungsrand (102) des Tanks (100) arretiert zu sein, der sich um die Schwenkachse (14) erstreckt,
- eine Vielzahl von Arretierungsorganen (13), die um die Schwenkachse (14) verteilt sind,
wobei der Deckel (10) **dadurch gekennzeichnet ist, dass** jedes der Arretierungsorgane (13) im Verhältnis zum ersten und zweiten Deckelteil (11, 12) zwischen einer Löseposition und einer Arretierungsposition, in der das Arretierungsorgan (13) mehr an die Schwenkachse angenähert ist als in der Löseposition und in der es bestimmt ist, mit einer radial äußeren Oberfläche (103) des Öffnungsrands (102) des Tanks (100) zusammenzuwirken, um den Deckel (10) im Verhältnis zum Tank (100) axial zu arretieren, beweglich angebracht ist, wobei der Deckel (10) derart eingerichtet ist, dass jedes der Arretierungsorgane (13) aus seiner Löseposition in seine Arretierungsposition verschoben wird, wenn der zweite Deckelteil (12) aus der ersten Löse-Winkelposition in die zweite Arretierungs-Winkelposition schwenkt.

2. Deckel (10) nach Anspruch 1, umfassend einen Bewegungsumwandlungsmechanismus (15, 23), der eingerichtet ist, um das Schwenken des zweiten Deckelteils (12) im Verhältnis zum ersten Deckelteil (11) aus der ersten Löse-Winkelposition in die zweite Arretierungs-Winkelposition in ein Verschieben jedes der Arretierungsorgane (13) im Verhältnis zum ersten Deckelteil (11) aus seiner Löseposition in seine Arretierungsposition umzuwandeln.

3. Deckel (10) nach Anspruch 2, wobei:
- der Bewegungsumwandlungsmechanismus (15, 23) mindestens ein erstes Antriebsorgan (15) umfasst, das von dem zweiten Deckelteil (12) getragen wird und mit den Arretierungsorganen (13) zusammenwirkt oder jedes mit einem oder mehreren der Arretierungsorgane (13),
- wobei das oder jedes der ersten Antriebsorgane (15) eingerichtet ist, um das oder die Arretierungsorgane (13), mit denen es zusammenwirkt, im Verhältnis zum ersten Deckelteil (11) aus ihrer Löseposition in ihre Arretierungsposition zu verschieben, wenn der zweite Deckelteil (12) aus der ersten Löse-Winkelposition in die zweite Arretierungs-Winkelposition schwenkt.

4. Deckel (10) nach Anspruch 3, wobei das oder jedes der ersten Antriebsorgane (15) einen Nocken bildet, der mit einem, mehreren oder den Arretierungsorganen (13) zusammenwirkt, die somit selbst Nockenmitnehmer bilden.

5. Deckel (10) nach Anspruch 3 oder Anspruch 4, wobei:
- das oder jedes der ersten Antriebsorgane (15) die Form einer ersten Rille aufweist, die sich gemäß einer Erstreckungslinie (17), die sich in einer Ebene orthogonal zur Schwenkachse (14) befindet, zwischen einem ersten Ende (20) und einem gegenüberliegenden zweiten Ende (21) erstreckt,
- die oder jede der ersten Rillen (15) mindestens eine erste Antriebsoberfläche (18, 19) umfasst, über die ein, mehrere oder die Arretierungsorganen (13) im Verhältnis zum ersten Deckelteil (11) zwischen ihrer Löseposition und ihrer Arretierungsposition verschoben werden, wenn der zweite Deckelteil (12) zwischen der ersten Löse-Winkelposition und der zweiten Arretierungs-Winkelposition schwenkt.

6. Deckel (10) nach Anspruch 5, wobei die Erstreckungslinie (17) der oder jeder der ersten Rillen (15) die Form einer Spirale aufweist.

7. Deckel (10) nach Anspruch 5 oder Anspruch 6, wobei die ersten Rillen (15) im Bereich ihres zweiten Endes (21), zu dem sich die Arretierungsorgane (13) verlagern, enger sind, wenn der zweite Deckelteil (12) in die erste Löse-Winkelposition schwenkt, als im Bereich ihres ersten Endes (20) und als zwischen ihrem ersten und zweiten Ende (20, 21).

8. Deckel (10) nach einem der Ansprüche 5 bis 7, wobei die zwei ersten Rillen (15), mit denen jedes Paar umfangmäßig benachbarter Arretierungsorgane (13) um die Schwenkachse (14) zusammenwirkt, radial zueinander im Verhältnis zur Schwenkachse (14) versetzt sind.

9. Deckel (10) nach einem der Ansprüche 1 bis 8, wobei jedes der Arretierungsorganen (13) im Verhältnis zum ersten Deckelteil (11) zwischen seiner Löseposition und seiner Arretierungsposition gemäß einer Gleitlinie (16) gleitend angebracht ist.

10. Deckel (10) nach Anspruch 9, wobei jede der Gleitlinien (16) gerade ist und in einer Ebene orthogonal zur Schwenkachse (14) liegt, so dass eine im Verhältnis zur Schwenkachse (14) radiale Gleitachse gebildet wird.

11. Deckel (10) nach einem der Ansprüche 1 bis 10, umfassend einen Verriegelungsmechanismus (31, 32, 33, 41), der eingerichtet ist, um das Schwenken des zweiten Deckelteils (12) im Verhältnis zum ersten Deckelteil (11) in einer Schwenkrichtung (P2) aus der zweiten Arretierungs-Winkelposition in die ersten Löse-Winkelposition automatisch zu verriegeln, wenn der zweite Deckelteil (12) die zweite Arretierungs-Winkelposition erreicht.

12. Deckel (10) nach Anspruch 11, wobei der Verriegelungsmechanismus (31, 32, 33, 41) umfasst:
- ein Verriegelungsorgan (31), das auf einem von dem ersten und zweiten Deckelteil (12, 11) zwischen einer Ruhestellung und einer gespannten Stellung, in welcher ein elastisches Rückstellorgan (33) das Verriegelungsorgan (31) in die Ruhestellung zurück verschiebt, beweglich angebracht ist,
- ein zweites Antriebsorgan (32), das mit dem anderen von dem ersten und zweiten Deckelteil (11, 12) fest verbunden ist und zum einen eingerichtet ist, um das Verriegelungsorgan (31) aus der Ruhestellung in die gespannte Stellung zu verschieben oder um das Verriegelungsorgan (31) in gespannter Stellung zu halten, wenn der zweite Deckelteil (12) aus der ersten Löse-Winkelposition in die zweite Arretierungs-Winkelposition schwenkt, und zum anderen, um das Verriegelungsorgan (31) loszulassen, wenn der zweite Deckelteil (12) die zweite Arretierungs-Winkelposition erreicht,
und wobei das Verriegelungsorgan (31) eingerichtet ist, um an dem anderen von dem ersten und zweiten Deckelteil (11, 12) in Anschlag zu gelangen, wenn der zweite Deckelteil (12) die zweite Arretierungs-Winkelposition erreicht und sich das Verriegelungsorgan (31) aus der gespannten Stellung in die Ruhestellung unter der Wirkung des elastischen Rückstellorgans (33) verschiebt, so dass das Schwenken des zweiten Deckelteils (12) in Schwenkrichtung (P2) aus der zweiten Arretierungs-Winkelposition in die erste Löse-Winkelposition automatisch verriegelt wird.

13. Deckel (10) nach Anspruch 12, wobei das zweite Antriebsorgan (32) einen Nocken bildet, der mit dem Verriegelungsorgan (31) zusammenwirkt, das somit selbst einen Nockenmitnehmer bildet.

14. Deckel (10) nach Anspruch 12 oder Anspruch 13, wobei das zweite Antriebsorgan (32) die Form einer Rampe aufweist, die von dem anderen von dem ersten und zweiten Deckelteil (11, 12) getragen wird und eine zweite Antriebsoberfläche (35) umfasst, über die das Verriegelungsorgan (31) aus der Ruhestellung in die gespannte Stellung verschoben wird, oder in gespannter Stellung gehalten wird, wenn der zweite Deckelteil (12) aus der ersten Löse-Winkelposition in die zweite Arretierungs-Winkelposition schwenkt.

15. Deckel (10) nach einem der Ansprüche 11 bis 14, wobei der Verriegelungsmechanismus (31, 32, 33, 41) ein Verriegelungsorgan (41) umfasst, das eingerichtet ist, um das Schwenken des zweiten Deckelteils (12) im Verhältnis zum ersten Deckelteil (11) in der Schwenkrichtung aus der zweiten Arretierungs-Winkelposition in die erste Löse-Winkelposition manuell zu entriegeln, wenn der zweite Deckelteil (12) in der zweiten Arretierungs-Winkelposition ist.

16. Deckel (10) nach Anspruch 15, wobei das Entriegelungsorgan (41) eingerichtet ist, um das Verriegelungsorgan (31) aus der Ruhestellung in die gespannte Stellung zu verschieben.

17. Deckel (10) nach Anspruch 16, wobei das Entriegelungsorgan (41) die Form eines Druckknopfs aufweist, der über einen von dem ersten und zweiten Deckelteil (12, 11) gemäß einer Gleitachse (42) zwischen einer gelösten Position, in der das Verriegelungsorgan (31) in Ruhestellung ist, und einer aktivierten Position, in welcher das Verriegelungsorgan (31) in gespannter Stellung ist, gleitend angebracht ist.

18. Deckel (10) nach Anspruch 17, wobei der Druckknopf (41) einen Stift bildet, der sich gemäß einer Gleitachse (42) zwischen einem ersten Ende (43) und einem gegenüberliegenden zweiten Ende (44) erstreckt, über das der Druckknopf (41) das Verriegelungsorgan (31) aus der Ruhestellung in die gespannte Stellung verschiebt.

19. Deckel (10) nach Anspruch 18, wobei der Verriegelungsmechanismus (31, 32, 33, 41) zwischen dem ersten und zweiten Deckelteil (11, 12) derart axial angeordnet ist, dass er im Inneren des Deckels (10) untergebracht ist, und wobei das erste Ende (43) des Druckknopfs (41) aus einem von dem ersten und zweiten Deckelteil (12, 11) außerhalb des Deckels (10) hervorsteht.

20. Deckel (10) nach einem der Ansprüche 12 bis 14 in Kombination mit einem der Ansprüche 17 bis 19, wobei das elastische Rückstellorgan (33) auch eingerichtet ist, um den Druckknopf (41) in die gelöste Position zurückzustellen.

21. Unteranordnung für einen Tank (100), der bestimmt ist, ein Pflanzenschutzmittel oder einen flüssigen Dünger zu enthalten, umfassend einen Deckel (10) nach einem der Ansprüche 1 bis 20 und einen ringförmigen Kragen (200), der sich um die Schwenkachse (14) erstreckt und bestimmt ist, am Öffnungsrand (102) des Tanks (100) befestigt zu sein, wobei die Arretierungsorgane (13) ferner mit der radial äußeren Oberfläche (103) des Öffnungsrandes (102) des Tanks (100) über den Kragen (200) zusammenwirken, wenn die Arretierungsorgane (13) in ihrer Arretierungsposition sind.

22. Unteranordnung nach Anspruch 21, umfassend ferner Spannmuttern, die bestimmt sind, den Kragen (200) am Öffnungsrand (102) des Tanks (100) zu befestigen.

23. Unteranordnung nach Anspruch 21 oder Anspruch 22, wobei die Arretierungsorgane (13) jeweils einen Körper (26) umfassen, der mit einer Kralle (27) versehen ist, die eingerichtet ist, um in eine Kerbe (203), die allgemein radial im Verhältnis zur Schwenkachse (14) in eine radial äußere Oberfläche (201) des Kragens (200) eingearbeitet ist, einzugreifen, wenn das Arretierungsorgan (13) in seiner Arretierungsposition ist, und um die Kerbe (203) freizugeben, wenn das Arretierungsorgan (13) in seiner Löseposition ist.

24. Anordnung, umfassend einen Tank (100), der bestimmt ist, ein Pflanzenschutzmittel oder einen flüssigen Dünger zu enthalten, sowie einen Deckel (10) nach einem der Ansprüche 1 bis 20 oder eine Unteranordnung nach einem der Ansprüche 21 bis 23.

## Claims

1. A cover (10) for a tank (100) for containing a plant protection product or a liquid fertiliser, the cover (10) being for sealing an opening (101) of the tank (100) defined by an opening rim (102), the cover (10) comprising:
- a first cover part (11),
- a second cover part (12) pivotally mounted to the first cover part (11) about a pivot axis (14) with axial direction, between a first angular position of unblocking the cover (10) and a second angular position of blocking the cover (10) in which the cover (10) is for being axially blocked to the opening rim (102) of the tank (100) extending about the pivot axis (14),
- a plurality of blocking members (13) distributed about the pivot axis (14),
the cover (10) being **characterised in that** each of the blocking members (13) is movably mounted relative to the first and second cover parts (11, 12) between an unblocking position and a blocking position in which the blocking member (13) is radially closer to the pivot axis than in the unblocking position and in which it is for cooperating with a radially external surface (103) of the opening rim (102) of the tank (100) in order to axially block the cover (10) relative to the tank (100), the cover (10) being designed such that each of the blocking members (13) is moved from its unblocking position to its blocking position, when the second cover part (12) pivots from the first unblocking angular position to the second blocking angular position.

2. The cover (10) according to claim 1, comprising a motion transformation mechanism (15, 23) designed to transform pivoting of the second cover part (12), relative to the first cover part (11), from the first unblocking angular position to the second blocking angular position, into movement of each of the blocking members (13), relative to the first cover part (11), from its unblocking position to its blocking position.

3. The cover (10) according to claim 2, wherein:
- the motion transformation mechanism (15, 23) comprises at least one first drive member (15) carried by the second cover part (12) and cooperating with the blocking members (13) or each with one or more of the blocking members (13),
- the or each of the first drive members (15) is designed to movably drive the or each blocking member (13) with which it cooperates, relative to the first cover part (11), from their unblocking position to their blocking position, when the second cover part (12) pivots from the first unblocking angular position to the second blocking angular position.

4. The cover (10) according claim 3, wherein the or each of the first drive members (15) forms a cam cooperating with the one or more blocking members (13) thereby forming cam followers themselves.

5. The cover (10) according to claim 3 or claim 4, wherein:
- the or each of the first drive members (15) is in the form of a first groove extending along a line of extension (17), lying in a plane orthogonal to the pivot axis (14), between a first end (20) and an opposite second end (21),
- the or each of the first grooves (15) comprises at least one first drive surface (18, 19) via which one, more or all the blocking members (13) are movably driven, relative to the first cover part (11), between their unblocking position and their blocking position, when the second cover part (12) pivots between the first unblocking angular position and the second blocking angular position.

6. The cover (10) according to claim 5, wherein the line of extension (17) of the or each of the first grooves (15) is spiral-shaped.

7. The cover (10) according to claim 5 or claim 6, wherein the first grooves (15) are tighter at their second end (21), towards which the blocking members (13) move, when the second cover part (12) pivots to the first unblocking angular position, than at their first end (20) and between their first and second ends (20, 21) .

8. The cover (10) according to one of claims 5 to 7, wherein the two first grooves (15) with which each pair of circumferentially adjacent blocking members (13) cooperate about the pivot axis (14) are radially offset from each other relative to the pivot axis (14)

9. The cover (10) according to one of claims 1 to 8, wherein each of the blocking members (13) is slidably mounted, relative to the first cover part (11), between its unblocking position and its blocking position, along a slide line (16).

10. The cover (10) according to claim 9, each of the slide lines (16) is rectilinear and lies in a plane orthogonal to the pivot axis (14), so as to form a slide axis radial to the pivot axis (14).

11. The cover (10) according to one of claims 1 to 10, comprising a latching mechanism (31, 32, 33, 41) designed to automatically latch pivoting of the second cover part (12) relative to the first cover part (12), in a pivot direction (P2) from the second blocking angular position to the first unblocking angular position, when the second cover part (12) reaches the second blocking angular position.

12. The cover (10) according to claim 11, wherein the latching mechanism (31, 32, 33, 34) comprises :
- a latching member (31) movably mounted to one of the first and second cover parts (12, 11) between a rest position and a restrained position in which an elastic return member (33) returns the latching member (31) to the rest position,
- a second drive member (32) integral with the other of the first and second cover parts (11, 12), and designed on the one hand to movably drive the latching member (31) from the rest position to the restrained position or to hold the latching member (31) in the restrained position, when the second cover part (12) pivots from the first unblocking angular position to the second blocking angular position, and on the other hand to release the latching member (31), when the second cover part (12) reaches the second blocking angular position;
and wherein the latching member (31) is designed to abut against the other one of the first and second cover parts (11,12), when the second cover part (12) reaches the second blocking angular position and the latching member (31) moves from the restrained position to the rest position under the effect of the elastic return member (33), so as to automatically latch pivoting of the second cover part (12) in the pivot direction from the second blocking angular position to the first unblocking angular position.

13. The cover (10) according to claim 12, wherein the second drive member (32) forms a cam cooperating with the latching member (31), thus forming a cam follower itself.

14. The cover (10) according to claim 12 or claim 13, wherein the second drive member (32) is in the form of a ramp carried by the other of the first and second cover parts (11, 12) and comprising a second drive surface (35) via which the latching member (31) is movably driven from the rest position to the restrained position, or is held in the restrained position, when the second cover part (12) pivots from the first unblocking angular position to the second blocking angular position.

15. The cover (10) according to any of claims 11 to 14, wherein the latching mechanism (31, 32, 33, 41) comprises an unlatching member (41) designed to manually unlatch pivoting of the second cover part (12), relative to the first cover part (11), in the pivot direction from the second blocking angular position to the first unblocking angular position, when the second cover part (12) occupies the second blocking angular position.

16. The cover (10) according to claim 15, wherein the unlatching member (41) is designed to movably drive the latching member (31) from the rest position to the restrained position.

17. The cover (10) according to claim 16, wherein the unlatching member (41) is in the form of a push button, slidably mounted to one of the first and second cover parts (12, 11) along a slide axis (42), between a released position in which the latching member (31) is in the rest position and an activated position in which the latching member (31) is in the restrained position.

18. The cover (10) according to claim 17, wherein the push button (41) forms a rod extending along the slide axis (42) between a first end (43) and an opposite second end (44), through which the push button (41) movably drives the latching member (31) from the rest position to the restrained position.

19. The cover (10) according to claim 18, wherein the latching mechanism (31, 32, 33, 41) is axially interposed between the first and second cover parts (11, 12), so as to be housed within the cover (10), and wherein the first end (43) of the push button (41) projects from one of the first and second cover parts (12, 11), outwardly of the cover(10).

20. The cover (10) according to one of claims 12 to 14 in combination with one of claims 17 to 19, wherein the elastic return member (33) is also designed to return the push button (41) to the released position.

21. A sub-assembly for a tank (100), for containing a plant protection product or a liquid fertiliser, comprising a cover (10) according to one of claims 1 to 20, and an annular flange (200), extending about the pivot axis (14) and for being attached to the opening rim (102) of the tank (100), the blocking members (13) further cooperating with the radially external surface (103) of the opening rim (102) of the tank (100) via the flange (200), when the blocking members (13) occupy the blocking position.

22. The sub-assembly according to claim 21, further comprising clinch nuts for attaching the flange (200) to the opening rim (102) of the tank (100).

23. The sub-assembly according to claim 21 or claim 22, wherein each of the blocking members (13) comprises a body (26) provided with a claw (27) designed to be housed into a notch (203) hollowed-out, overall radially with respect to the pivot axis (14), in a radially external surface (201) of the flange (200), when the blocking member (13) occupies its blocking position, and to release the notch (203), when the blocking member (13) occupies its unblocking position.

24. An assembly comprising a tank (100) for containing a plant protection product or a liquid fertiliser as well as a cover (10) according to any of claims 1 to 20 or a sub-assembly according to any of claims 21 to 23.
